# EUROPEAN PATENT APPLICATION

(11) **EP 3 395 725 A1**
(43) Date of publication of application: **31.10.2018**
(21) Application number: 15911283.8
(22) Date of filing: 22.12.2015
(51) Int. Cl.: B65G 1/137, B65G 61/00, B65G 63/00, G06Q 10/08, G06Q 50/28, G08G 1/13

(54) **VEHICLE LOGISTICS MANAGEMENT SYSTEM**

(71) Applicant: Nippon Yusen Kabushiki Kaisha, Tokyo 100-0005 (JP)
(72) Inventor: AWAMOTO, Shigeru, Tokyo 100-0005 (JP); NAKAMURA, Yoshio, Tokyo 100-0005 (JP)
(74) Representative: Wilson Gunn
(86) International application number: PCT/JP2015/085756
(87) International publication number: WO 2017/109845

(57) **Abstract**

Provided is a technique capable of reducing labor and cost of an operation of registration of a vehicle storage position, thereby realizing efficiency improvement of vehicle logistics service. A vehicle logistics management system includes a mobile terminal which is carried by an operator performing an operation of moving a vehicle in a site, a server device registering information including a position of the vehicle in a DB, and vehicle getting on and off determination means determining that the operator has got on the vehicle and got off the vehicle in the operation. The mobile terminal acquires first position information by GNSS positioning, and transmits, when the vehicle getting on and off determination means determines the getting on, getting on information including the first position information and a terminal ID, to the server device, and transmits, when the vehicle getting on and off determination means determines the getting off, getting off information including the first position information and the terminal ID, to the server device. The server device grasps that the operation has been performed by using the getting on information and the getting off information, and registers information including the post-movement position of the vehicle in the DB.

## Description

### TECHNICAL FIELD

The present invention relates to information processing techniques for logistics service management.

### BACKGROUND ART

In logistics service having a vehicle as a cargo, a vehicle is set to be a position management target, and is stored in a site that is a logistics terminal. The vehicle is carried in from the outside to the site according to receiving or the like, is moved in the site as necessary, so that a storage position is changed, and then, the vehicle is carried out from the site to the outside according to delivery or the like.

With regard to a position in the site, positioning using a positioning system such as a global navigation satellite system (GNSS) including a GPS is available. A GNSS receiver on the ground can obtain a current position coordinate including latitude and longitude based on a radio wave signal received from a satellite.

One example of conventional techniques relating to information management of logistics service is disclosed in Japanese Patent Application Laid-Open Publication No. 2001-348110. Patent Document 1 discloses that, as a logistics management method and the like, transmission to a center is performed with GPS information and barcode information added, from a mobile terminal based on an instruction from a center or the like.

### RELATED ART DOCUMENTS

### PATENT DOCUMENTS

Patent Document 1: Japanese Patent Application Laid-Open Publication No. 2001-348110

### SUMMARY OF THE INVENTION

### PROBLEMS TO BE SOLVED BY THE INVENTION

Conventional vehicle logistics service is realized, for example, by divided operations of a first operator and a second operator. A first operator who is a driver performs an operation of driving and moving a target vehicle in accordance with operation instructions. The second operator who is a checker checks a storage position of the vehicle in a site, an ID, and the like, as an operation related to cargo confirmation and information management, and performs an operation of registering in a computer. The second operator goes round the site, collects information such as a storage position of the vehicle and the ID, and registers the collected information in the computer. The information management can contribute to accuracy and promptness of the service.

However, in a conventional information management technique of vehicle logistics service, proportion of manual operation is large, which requires much time and effort, and costs related to the service are high. Since a large number of vehicles move frequently in the site, it is necessary to change the storage position for each vehicle. In particular, the second operator requires a great deal of time and effort to check and register the storage position of each vehicle. For example, in lane management, although a plurality of vehicles are stored in tandem, it is necessary to move a plurality of related vehicles for moving a single vehicle.

As a mode of operation, it is conceivable that the first operator performs both the vehicle movement and the information registration without dividing those operations. However, with respect to the vehicle movement operation, high cargo handling quality is required so as not to damage vehicles as products, and a short-time operation is also required to meet a delivery deadline and the like. When the information registration and the like as well as driving operation are mixed as operations of the first operator, it is difficult to concentrate on driving, and the cargo handling quality may deteriorate. In addition, mistakes such as forgetting registration and registration errors are also likely to occur. Therefore, it is more efficient that the first operator concentrates on the vehicle movement operation.

Also, there is a time lag between a time point when the storage position is changed by the vehicle movement by the first operator and a time point when the storage position is registered by the second operator. This lag causes a period of time when the vehicle position is not accurately grasped, in information management. Therefore, the conventional technique also has a problem in terms of accuracy of vehicle position management.

For the conventional vehicle logistics service, efficiency improvement has been required by introduction and improvement of a system. It is desirable that the storage position and the like of each vehicle in the site can be registered as accurately as possible with little labor and cost and can always be grasped.

Note that the conventional technique like Patent Document 1 is a position management technique directed to a vehicle that delivers cargo and its deliverer and is not a position management technique for a vehicle that is cargo in vehicle logistics service, so that the conventional technique like Patent Document 1 cannot be applied effectively as it is to vehicle logistics service.

An object of the present invention is to provide, regarding a technique including information management of vehicle logistics service, a technique capable of reducing the labor and cost of operations such as registration of a vehicle storage position and realizing improvement in overall efficiency of vehicle logistics service, and the like.

### MEANS FOR SOLVING THE PROBLEM

A typical embodiment of the present invention is a vehicle logistics management system and has a feature that the system includes the following configuration. The vehicle logistics management system of the typical embodiment of the present invention is a vehicle logistics management system managing a position of a vehicle in a site, the vehicle logistics management system including:
a mobile terminal which is carried by an operator performing an operation of moving the vehicle in the site;
a server device communicating with the mobile terminal and registering infonnation including the position of the vehicle in a DB; and
vehicle getting on and off determination means determining that the operator has got on the vehicle and got off the vehicle in the operation,
the mobile terminal having
   a position information acquisition unit acquiring first position information by GNSS positioning, and
   a server communication unit transmitting, when the vehicle getting on and off determination means determines the getting on, getting on information including the first position information obtained by positioning in vicinity of a time point when the getting on is determined, and a terminal ID, to the server device, and transmitting, when the vehicle getting on and off determination means determines the getting off, getting off information including the first position information obtained by positioning in vicinity of a time point when the getting off is determined, and the terminal ID, to the server device, and
the server device having a position registration unit which grasps that the operator has got on the vehicle at a pre-movement position indicated by the first position information by using the getting on information, grasps that the operator has got off the vehicle at a post-movement position indicated by the first position information by using the getting off information, thereby grasps that the operation has been performed, and registers information including the post-movement position of the vehicle in the DB.

### EFFECTS OF THE INVENTION

According to the typical embodiment of the present invention, regarding the technique including the information management of the vehicle logistics service, it is possible to reduce the labor and cost of operations such as registration of a vehicle storage position and realize improvement in overall efficiency of the vehicle logistics service, and the like.

### BRIEF DESCRIPTIONS OF THE DRAWINGS

FIG 1 is a diagram showing a configuration of a vehicle logistics management system according to a first embodiment of the present invention;
FIG 2 is a diagram showing a functional block configuration of a mobile terminal and a GNSS receiver of an operator system in the first embodiment;
FIG 3 is a diagram showing a functional block configuration of a server and the like of a center system in the first embodiment;
FIG 4 is a diagram showing a configuration example of information in a DB of the server in the first embodiment;
FIG 5 is a diagram showing a configuration example of a site, a vehicle movement operation, an area, and the like in the first embodiment;
FIG. 6 is a diagram showing a configuration example of a section in the first embodiment;
FIG 7 is a diagram showing an example of position mapping in the first embodiment;
FIG 8 is a diagram showing an example of getting on and off the vehicle in the first embodiment;
FIG 9 is a diagram showing a sequence of processes between operations and elements in the first embodiment;
FIG 10 is a diagram showing a configuration example of first position information in the first embodiment;
FIG 11 is a diagram showing a flow of a vehicle getting on and off determination process of the mobile terminal in the first embodiment;
FIG 12 is a diagram showing a flow of a process of the server in getting on the vehicle in the first embodiment;
FIG 13 is a diagram showing a flow of a process of the server in getting off the vehicle in the first embodiment;
FIG 14 is a diagram for explaining details of vehicle getting on and off determination in the first embodiment;
FIG 15 is a diagram for explaining details of position grasping in getting on the vehicle in the first embodiment;
FIG. 16 is a diagram showing a sequence of processes between operations and elements in a vehicle logistics management system according to a second embodiment of the present invention;
FIG 17 is a diagram showing a configuration of a vehicle logistics management system according to a third embodiment of the present invention; and
FIG 18 is a diagram showing a configuration of a vehicle logistics management system according to a fourth embodiment of the present invention.

### DETAILED DESCRIPTION OF PREFERRED EMBODIMENTS

### (First Embodiment)

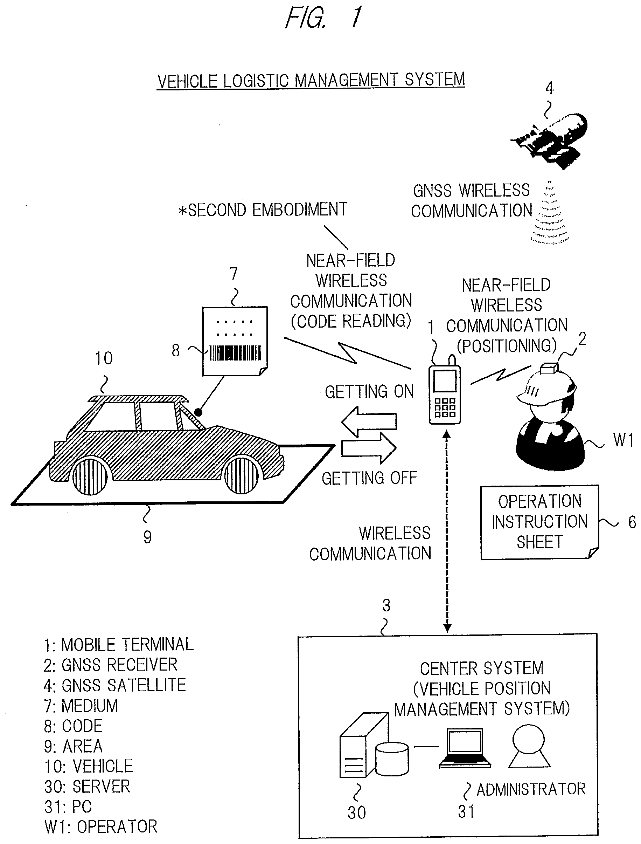

With reference to FIG 1 to FIG 15, a vehicle logistics management system according to a first embodiment of the present invention will be described. The vehicle logistics management system according to the first embodiment is a system including a function of automatically registering and updating information such as a vehicle storage position, as information management related to a vehicle movement operation in a site in vehicle logistics service. This function uses vehicle getting on and off determination means determining that an operator has got on a vehicle or has got off the vehicle, in the vehicle movement operation. In the first embodiment, means determining GNSS positioning information is used as the vehicle getting on and off determination means.

### [Vehicle Logistics Management System]

FIG 1 is a diagram showing a configuration of the vehicle logistics management system according to the first embodiment of the present invention. The vehicle logistics management system according to the first embodiment has a mobile terminal 1, a GNSS receiver 2, a center system 3, a GNSS satellite 4, a vehicle 10, and the like. An operator system handled by an operator W1 has the mobile terminal 1 and the GNSS receiver 2. The center system 3 is a system handled by an administrator, and has a server 30 and a PC 31.

The mobile terminal 1 and the GNSS receiver 2 are connected by near-field wireless communication, and both cooperate and operate to realize a predetermined function. Connection between the mobile terminal 1 and the GNSS receiver 2 may be wired communication. The mobile terminal 1 and the server 30 are connected by wireless communication, and both cooperate and operate to realize a predetermined function.

Each vehicle 10 is managed by using a vehicle ID number (VIN) as a vehicle ID. Information including the VIN and a storage position of the vehicle 10 is managed in a DB of the server 30. In FIG 1, a medium 7 attached in association with the vehicle 10 is included. In the medium 7, information including the VIN is written in the form of a code 8. In the first embodiment, use of the medium 7 is not essential, and the medium 7 is not used in the following example. In the first embodiment, a reader function of reading the information on the medium 7 is also unnecessary. In a second embodiment described later, the medium 7 is used, and the reader function of reading the information on the medium 7 is included.

The operator W1 is a driver, and performs a vehicle movement operation of driving and moving the vehicle 10. The operator W1 equips the mobile terminal 1 and the GNSS receiver 2 at predetermined positions. The operator W1 performs the operation while referring to an operation instruction sheet 6 or operation instruction information displayed on a screen of the mobile terminal 1. The mobile terminal 1 is equipped, for example, in clothes or the like of the operator W1. The GNSS receiver 2 is equipped, for example, in a cap on the head or on the shoulder of the operator W1. It is desirable that the GNSS receiver 2 is equipped at a position where a radio wave from the GNSS satellite 4 is easily received. Basically, the operator W1 does not need to operate the mobile terminal 1 and the GNSS receiver 2 during the operation.

The vehicle 10 that is cargo is stored in a region 9 in the site. The operator W1 gets on the vehicle 10 stored in the region 9 of a movement origin position in accordance with the operation instruction sheet 6, drives and moves the vehicle 10 in the site, stops the vehicle 10 in the region 9 of a movement destination position, and gets off the vehicle 10.

The mobile terminal 1 cooperates with the GNSS receiver 2 and the server 30. The mobile terminal 1 has a near-field wireless communication function with the GNSS receiver 2, and a wireless communication function with the server 30. In addition, the mobile terminal 1 includes a function of displaying the operation instruction information and the like. As the mobile terminal 1, known hand-held terminals, smart phones, and other equipment can be applied. In a function ON state, the mobile terminal 1 automatically communicates and cooperates with the server 30 not depending on an operation of the operator W1.

The GNSS receiver 2 has a positioning function by the GNSS including the GPS and a near-field wireless communication function with the mobile terminal 1. In the function ON state, the GNSS receiver 2 automatically communicates and cooperates with the mobile terminal 1 not depending on an operation of the operator W1. The GNSS receiver 2 is means measuring a position of the operator W1 and the vehicle in the site and is an element composing the vehicle getting on and off determination means.

The center system 3 is a vehicle position management system and is connected to a communication network and a host system not shown. The server 30 is a vehicle position management device and manages various types of information for information management in the DB. The server 30 has a wireless communication function with the mobile terminal 1 of the operator W1. The PC 31 is a terminal operated by the administrator and is connected to the server 30. The administrator is an office operator or the like and manages the server 30, the operation instructions, and the like. The PC 31 accesses the server 30 based on an operation of the administrator and uses a service process of the server 30.

The center system 3 receives information and instructions related to vehicle logistics from the host system. An example thereof is information on receiving and delivery of the vehicle 10 in the site. The center system 3 and the administrator create the operation instruction of the vehicle movement operation and the like based on the information and store the operation instruction information in the DB. The administrator outputs the operation instruction to the operator W1 as the operation instruction sheet 6 or the operation instruction information to the screen of the mobile terminal 1. The center system 3 may be integrated with the host system.

In the operation instruction information such as the operation instruction sheet 6, information such as operation date and time, a target vehicle, the movement origin position, the movement destination position is described as the operation instruction related to the vehicle movement operation. The operation instruction is not limited to the operation instruction sheet 6 of paper, and the operation instruction information may be displayed on the screen of the mobile terminal 1. In that case, the server 30 or the PC 31 transmits the operation instruction information to the mobile terminal 1 of the operator W1 based on an operation of the administrator, and the mobile terminal 1 displays the operation instruction information on the screen.

The mobile terminal 1 and the GNSS receiver 2 may be integrated as one device. That is, the mobile terminal 1 may be a device having a GNSS positioning function. The operator W1 equips the mobile terminal 1 at a predetermined position. Connection between the mobile terminal 1 and the GNSS receiver 2 is not limited to the near-field wireless communication and may be wired connection. The mobile terminal 1 and the GNSS receiver 2 are not limited to the above configuration, and other configurations may be adopted as long as a predetermined positioning performance can be secured. Positioning means is not limited to the GNSS, but other positioning means and a wireless communication system are also applicable. As another means, positioning means according to the triangulation principle, or a wireless communication system using a predetermined band radio wave such as Wi-Fi, Ultra Wide Band (UWB), or the like is also applicable. Also, when an indoor site is used, an indoor positioning system that realizes indoor positioning can be applied.

### [Operator System]

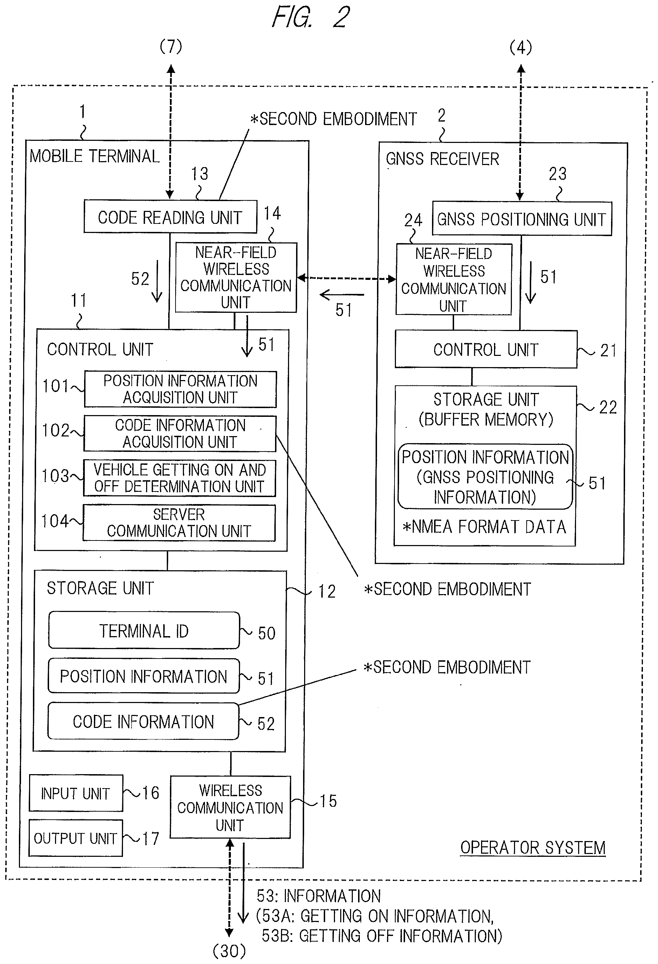

FIG 2 is a diagram showing a functional block configuration of the mobile terminal 1 and the GNSS receiver 2 of the operator system in the first embodiment. The mobile terminal 1 includes a control unit 11, a storage unit 12, a near-field wireless communication unit 14, a wireless communication unit 15, an input unit 16, an output unit 17, and the like. The mobile terminal 1 does not include a code reading unit 13 in the first embodiment and includes the code reading unit 13 in the second embodiment. The GNSS receiver 2 includes a control unit 21, a buffer memory that is a storage unit 22, a GNSS positioning unit 23, a near-field wireless communication unit 24, and the like.

The control unit 11 controls the mobile terminal 1. The control unit 11 has a position information acquisition unit 101, a vehicle getting on and off determination unit 103, and a server communication unit 104 as processing units realized by software program processing, hardware circuit processing, or the like. Note that the control unit 11 does not include a code information acquisition unit 102 in the first embodiment and includes the code information acquisition unit 102 in the second embodiment.

The storage unit 12 stores information to be processed by the control unit 11. A terminal ID 50, position information 51, and the like are stored in the storage unit 12. In the storage unit 12, code information 52 is not stored in the first embodiment, and the code information 52 is stored in the second embodiment. The terminal ID 50 is an ID for uniquely identifying the mobile terminal 1. The terminal ID 50 is associated with an operator ID for uniquely identifying the operator W1 having the mobile terminal 1. Instead of the terminal ID 50, an operator ID may be used. The position information 51 is first position information that is the GNSS positioning information obtained from the GNSS receiver 2.

The near-field wireless communication unit 14 of the mobile terminal 1 performs near-field wireless communication with the near-field wireless communication unit 24 of the GNSS receiver 2. The wireless communication unit 15 performs wireless communication with the server 30. The input unit 16 includes operation buttons, a microphone, and the like. The output unit 17 includes a display, a speaker, and the like.

The GNSS receiver 2 has a function of performing positioning of the GNSS and periodically outputting the GNSS positioning information as NMEA format data. The control unit 21 controls the GNSS receiver 2. The storage unit 22 stores information processed by the control unit 21. In the first embodiment, the storage unit 22 is a buffer memory that temporarily stores the position information 51 obtained from the GNSS positioning unit 23. It is sufficient that the storage unit 22 may have a memory capacity for storing a predetermined amount of position information 51 as a log. Even when a communication error with the mobile terminal 1, or the like occurs, recovery can be performed by accumulating the position information 51 in the storage unit 22.

The GNSS positioning unit 23 wirelessly communicates with the GNSS satellite 4 and performs positioning of a current position of the GNSS receiver 2 by using a signal including time in a radio wave received from the GNSS satellite 4. The GNSS positioning unit 23 periodically outputs the NMEA format data that is the position information 51 by the positioning, at a predetermined cycle. An output cycle is, for example, one second. The position information 51 is the NMEA format data serving as the GNSS positioning information and is the first position information including a position coordinate based on latitude and longitude. The control unit 21 temporarily stores the position information 51 from the GNSS positioning unit 23 in the storage unit 22, reads out the position information 51 stored in the storage unit 22, and passes the position information 51 to the near-field wireless communication unit 24. The near-field wireless communication unit 24 transmits the position information 51 to the near-field wireless communication unit 14 of the mobile terminal 1.

Note that the function of storing the position information 51 as a log in the storage unit 22 by the GNSS receiver 2 is not essential, and the position information 51 may be instantaneously output from the GNSS positioning unit 23 to the mobile terminal 1 through the near-field wireless communication unit 24.

The near-field wireless communication unit 14 of the mobile terminal 1 passes the position information 51 received from the near-field wireless communication unit 24 of the GNSS receiver 2 to the position information acquisition unit 101 of the control unit 11. The position information acquisition unit 101 of the control unit 11 periodically acquires the position information 51 from the GNSS receiver 2 and stores the position information 51 in the storage unit 12.

The vehicle getting on and off determination unit 103 always performs a vehicle getting on and off detennination process, using the position information 51. The vehicle getting on and off determination unit 103 determines whether the operator W1 has got on the vehicle or has got off the vehicle by the vehicle getting on and off determination process. When determining that the operator W1 has got on or determining that the operator W1 has got off, the vehicle getting on and off determination unit 103 causes the server communication unit 104 to transmit predetermined information 53 to the server 30.

The server communication unit 104 performs a communication process with the server 30 in cooperation with the vehicle getting on and off determination unit 103 to perform a process of causing the server 30 to register the vehicle storage position and the like. The server communication unit 104 transmits getting on information 53A and getting off information 53B as the predetermined information 53 to the server 30.

### [Center System]

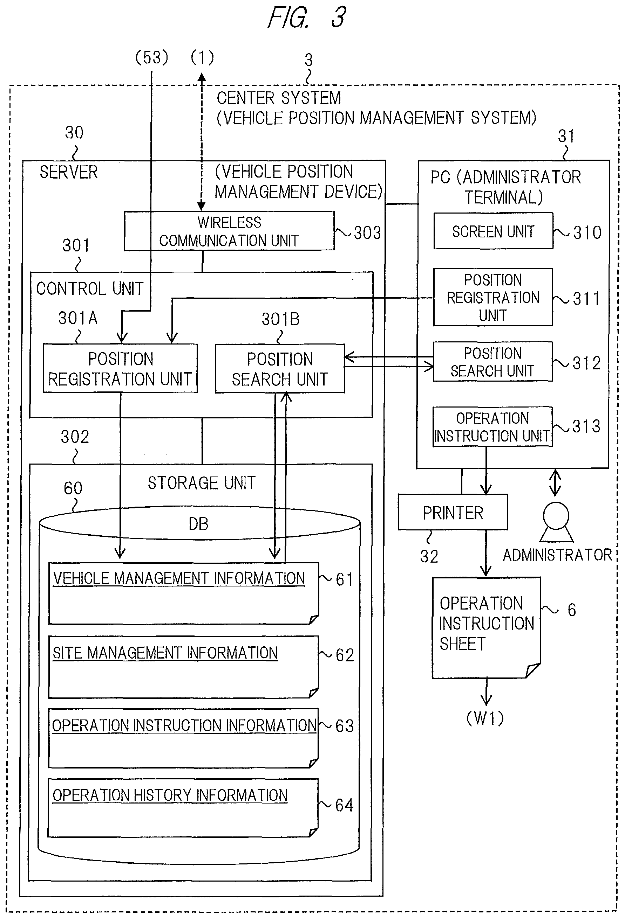

FIG 3 is a diagram showing a functional block configuration of the server 30 and the PC 31 of the center system 3 and showing a configuration example of information in a DB 60. The server 30 and the PC 31 are communicatively connected via a LAN or the like. The server 30 has a control unit 301, a storage unit 302, and a wireless communication unit 303. The control unit 301 controls the server 30 and includes a position registration unit 301A and a position search unit 301B as processing units realized by software program processing. A program, data, and the like to be used by the control unit 301 are stored in the storage unit 302. The DB 60 for vehicle logistics management is stored in the storage unit 302. The wireless communication unit 303 performs a wireless communication process with the mobile terminal 1.

The position registration unit 301A grasps movement, storage position change, and the like of the target vehicle by performing processes such as predetermined decision by using the predetermined information 53 received from the mobile terminal 1 through the wireless communication unit 303. When deciding that the movement of the vehicle has occurred, the position registration unit 301A registers and updates the storage position of the vehicle in vehicle management information 61 in the DB 60.

When receiving a request for manual registration of the vehicle storage position from the position registration unit 311 of the PC 31, the position registration unit 301A registers and updates the storage position of the vehicle in the vehicle management information 61 in the DB 60 according to the request.

When receiving a search request of the vehicle storage position or the like from the position search unit 312 of the PC 31, the position search unit 301B searches the vehicle management information 61 and the like in the DB 60 according to the request and the search condition information and transmits search result information to the position search unit 312 as a response.

The PC 31 has a screen unit 310, a position registration unit 311, a position search unit 312, and an operation instruction unit 313. The screen unit 310 displays a user interface screen for operation management to the administrator. The administrator can display contents of each piece of information in the DB 60 of the server 30 to confirm and edit the contents on a screen of the PC 31.

The position registration unit 311 performs a process of registering information including the position of the vehicle in the DB 60 of the server 30 based on manual operation by the administrator. Initial registration by the administrator can be performed by using the position registration unit 311. In this case, the position registration unit 311 transmits a registration request including registration position information input by the administrator on the screen, to the position registration unit 301A of the server 30. The position search unit 312 performs a process of searching information including the vehicle storage position from the DB 60 of the server 30 based on manual operation by the administrator. The position search unit 312 transmits a search request including the search condition information input on the screen to the position search unit 301B of the server 30. The position search unit 312 displays the search result information on the screen of the screen unit 310.

The operation instruction unit 313 creates operation instruction information of the vehicle movement operation based on the manual operation by the administrator and performs a process of outputting the operation instruction information as the operation instruction sheet 6 or the operation instruction information to the screen of the mobile terminal 1. The operation instruction information is printed as the operation instruction sheet 6 by a printer 32 connected to the PC 31.

Vehicle management information 61, site management information 62, operation instruction information 63, operation history information 64, and the like are included as information managed by the DB 60. Other information not shown includes operator management information including association information between the terminal ID and the operator ID, and the like.

The administrator can perform user setting related to the function of the system from the PC 31 to the server 30 through a setting screen. This setting includes setting of a position management method and a site described later, and setting of an operation management function. In addition, there is setting of whether operation instruction information, alerts, or the like is output to the mobile terminal 1, and the like.

### [DB Information]

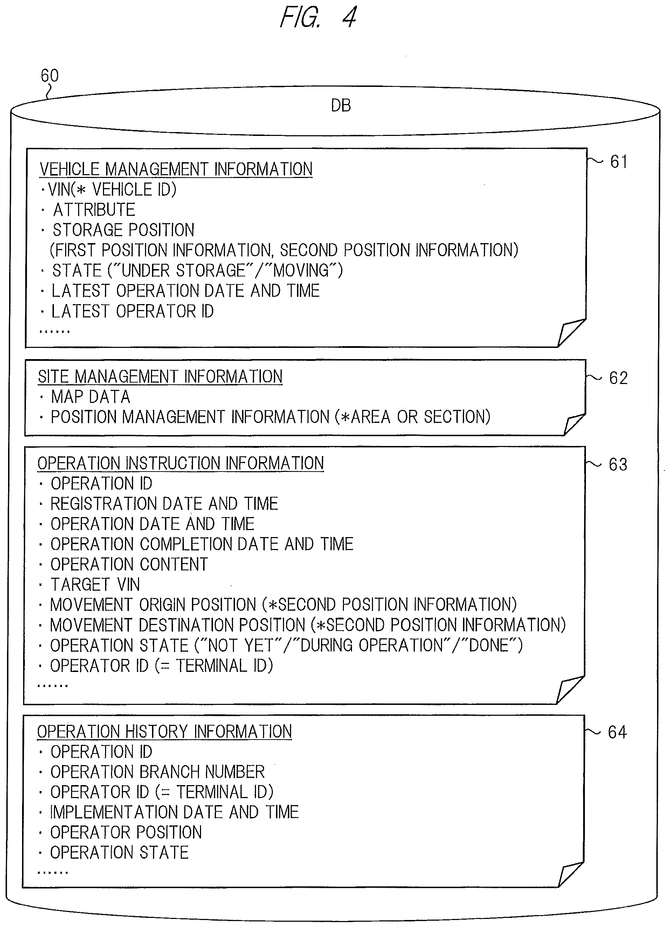

FIG 4 shows a configuration example of information registered in the DB 60. The vehicle management information 61 is information for managing various types of information and a state of each vehicle 10. The site management information 62 is information for managing a configuration of the site. The operation instruction information 63 is information for managing an operation instruction and an operation state for each vehicle movement operation. The operation history information 64 is information for managing the history of each vehicle movement operation and each operator W1 in relation to the operation instruction information 63.

The vehicle management information 61 includes information such as a VIN serving as a vehicle ID, an attribute, a storage position, a state, a latest operation date and time, a latest operator ID, and the like. The attribute includes a model, a vehicle type, a color, and the like. The storage position is information for managing the storage position of the vehicle in the site. In the first embodiment, the storage position includes the first position information and the second position information. Latitude and longitude according to the GNSS positioning information corresponding to the position information 51 are included as the first position information. An ID of a unit such as an area or a section in the site, is included as the second position information. The association between the first position information and the second position information is managed by position mapping described later. The "state" is information representing a state of each vehicle and has values such as "under storage", "moving", and the like.

The site management information 62 includes map data of the site and position management information for managing a configuration of position management in the site. The configuration of position management has a configuration of an area or a section. The second position information is an area ID or a section ID based on the position management information.

The operation instruction information 63 includes an operation ID, a registration date and time, an operation date and time, an operation completion date and time, an operation content, a target VIN, a movement origin position, a movement destination position, an operation state, and the like. The operation ID is an identification number or the like of a unit of the vehicle movement operation. The registration date and time is a date and time when the operation instruction is registered. The operation date and time is a date and time or a period during which the operation should be performed. The operation completion date and time is a date and time when the operation is completed. The operation content is a value indicating a distinction of movement, receiving, delivery, or the like. The target VIN is a VIN of a movement target vehicle. The movement origin position and the movement destination position can be specified by the second position information. The operation state has values of "not yet", "during operation", "done", and the like. Note that, depending on operation instruction, part of the target VIN, the movement origin position, and the movement destination position may be omitted. When the operator who performs the operation is specified, the operation instruction information 63 includes information associating the operation ID of the operation and the operator ID (= terminal ID) of the operator.

The operation history information 64 includes an operation ID, an operation branch number, an operator ID (= terminal ID), an implementation date and time, an operator position, an operation state, and the like. The operation ID indicates the operation ID of the operation instruction information 63. The operation branch number is allocated when one operation has been divided into plural operations and performed. The operator ID indicates the operator W1 who performs the operation of the operation ID. The implementation date and time is a date and time when the operator performs the operation. For the implementation date and time, a plurality of dates and times may be provided in chronological order, and details of operations such as getting on and getting off the vehicle may be recorded. The operator position indicates the position of the operator W1 grasped by using the information 53 from the mobile terminal 1. The operation state is the same as the information in the operation instruction information 63.

Note that, in the first embodiment, it is assumed that the operator ID and the terminal ID are associated on a one-to-one basis and the mobile terminal 1 having one determined terminal ID is assigned to each operator W1. The present invention is not limited thereto. For example, one mobile terminal 1 is used by a plurality of operators W1. The server 30 manages association between one terminal ID and the plurality of operator IDs as ID management in this case. Accordingly, even in this case, the operator W1 can be identified.

### [Site, Vehicle Movement Operation, Area, and Section]

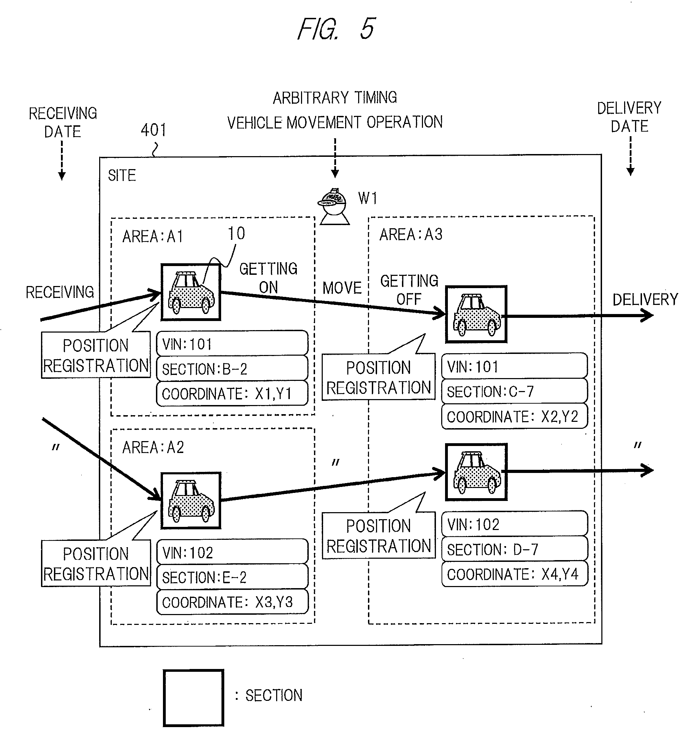

FIG 5 shows examples of receiving and delivery of the vehicle 10 in the site, vehicle movement operation, areas, sections, and the like. A site 401 corresponds to a warehouse of logistics. The site 401 is an outdoor space where the GNSS is available. The site 401 has a large area of, for example, 1 square km or more and can store tens of thousands of vehicles. Improvement of space utilization efficiency of the site 401 is required. Depending on a size of the site 401, searching for vehicles requires much time, and accurate and short-time search is required. By registering the storage position of the vehicle in the site 401 in the center system 3, the search is available, the search for the vehicle becomes easy, and delivery operation and the like can be realized in a short time.

Examples of receiving sources for the site 401 include a factory and the like, and examples of delivery destinations include a container ship, a trailer car, and the like. The storage position of the vehicle 10 is registered and updated at the time of receiving, moving, and delivery of the vehicle 10. When the vehicle 10 is moved in the site 401 in the vehicle movement operation by the operator W1, the storage position of the vehicle 10 in the DB 60 is automatically registered and updated from a pre-movement position to a post-movement position in accordance with the movement.

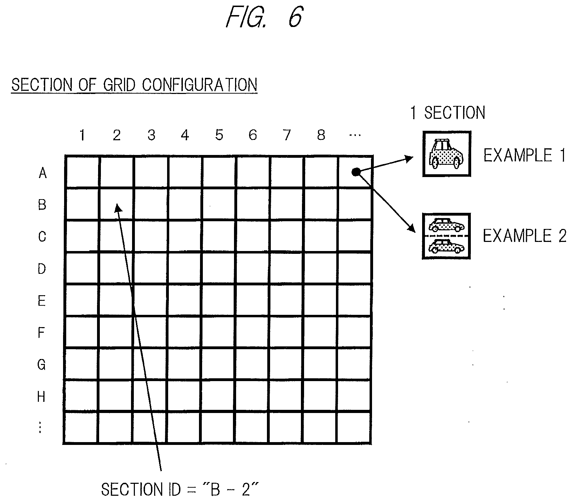

In the site 401, an area and a section are defined in some cases. The area is a region arbitrarily set according to the service. Examples of areas include an area for each receiving source, an area for each delivery destination, an area for each vehicle type, an area for each delivery date, and the like. In this example, there are areas A1 to A3. The areas A1 and A2 are the areas corresponding to the receiving source, and the area A3 is the area corresponding to the delivery destination. It is assumed that "Al" and the like are used as area IDs. In this example, sections shown in FIG 6 are provided in the site 401. "B-2" and the like are used as section IDs. In FIG 5, there are sections "B-2", "E-2", "C-7", and "D-7".

FIG 6 shows a section of a grid configuration as an example of position management in the site. As a unit for managing the storage position of the vehicle in the site, the section is used in addition to the position coordinate and the area. In this example, a plurality of sections are formed by a grid configuration in which the entire site 401 is sectioned by lines with constant intervals, extending in an east-west direction and a north-south direction. One section is a rectangular region having a predetermined area. A size and a shape of each of the area and the section are basically arbitrary. However, they are designed taking into consideration a size of the vehicle, a margin space for operation, a storage rule, GNSS positioning accuracy, and the like. A predetermined number of vehicles 10 are stored in one section. A configuration may be adopted in which one vehicle 10 is stored in one section, or a configuration may be adopted in which a plurality of vehicles 10 are stored in one section. In FIG. 6, as the section ID, alphabetical letters are used as suffixes in the north-south direction, numerals are used as suffixes in the east-west direction, and with a combination thereof, the section ID is indicated by "A-1" or the like.

In the first embodiment, the server 30 handles both the first position information that is the GNSS positioning information and the second position information that is the ID of the area, the section, and the like, as the position management, and registers the information in the DB 60, in association with each other by position mapping.

The position management in the site is not limited to the configurations of the area and the section described above, and a parking region, a road region, or the like of an arbitrary shape may be defined according to a place. For example, a region for lane management may be defined. Only an area or only a section may be defined. There are various kinds of storage rules of the vehicle in the site, such as the lane management. However, the system of the first embodiment can be applied also to cases of any storage rule.

In FIG 5, examples of receiving and delivery, vehicle movement operation, and storage position registration are as follows.
(1) At a timing of a receiving date or the like, the vehicle 10 is received from the factory that is the receiving source to a vacant place in the site 401. For example, the vehicle 10 having VIN = 101 is stored in the section B-2 of the area A1. The first position information corresponding to the storage position is a coordinate (X1, Y1) by the GNSS positioning. Also, the vehicle 10 having VIN = 102 is stored in the section E-2 of the area A2. The first position information corresponding to the storage position is a coordinate (X3, Y3). The storage positions of those vehicles 10 are initially registered in the DB 60 of the server 30. Note that, in the first embodiment, such initial registration is performed. However, the first embodiment can be applied also to cases where initial registration is not performed.
(2) The storage position of the vehicle 10 received and stored in the site 401 is changed by the vehicle movement operation at a predetermined operation date and time in accordance with an arbitrary timing, for example, delivery establishment and the like. In accordance with operation instruction, the operator W1 drives and moves the target vehicle from the movement origin position to the movement destination position. The vehicle 10 is moved to, for example, an area for each delivery destination as a movement destination position.
   In FIG 5, the vehicle 10 having VIN = 101 has been moved from the pre-movement position corresponding to the movement origin position of the operation instruction to the section C-7 of the area A3 that is the post-movement position corresponding to the movement destination position. The first position information corresponding to the storage position is a coordinate (X2, Y2). Also, the vehicle 10 having VIN = 102 has been moved to the section D-7 of the area A3 that is the post-movement position. The first position information corresponding to the storage position is a coordinate (X4, Y4). The storage positions of those vehicles 10 after the change are registered and updated in the DB 60 of the server 30. Note that the vehicle movement operation at an arbitrary timing may be an operation aiming at optimization so as to organize the storage position of each vehicle in the site and create a group of empty spaces.
(3) Thereafter, at a timing of the delivery date or the like, the vehicle 10 is canied out from the site 401, and loaded on a container ship or a trailer car corresponding to the delivery destination. For example, each of the vehicle 10 having VIN = 101 and the vehicle 10 having VIN = 102 in the area A3 is delivered. Information such as the storage position of each vehicle in the DB 60 is updated by delivery.

### [Position Mapping]

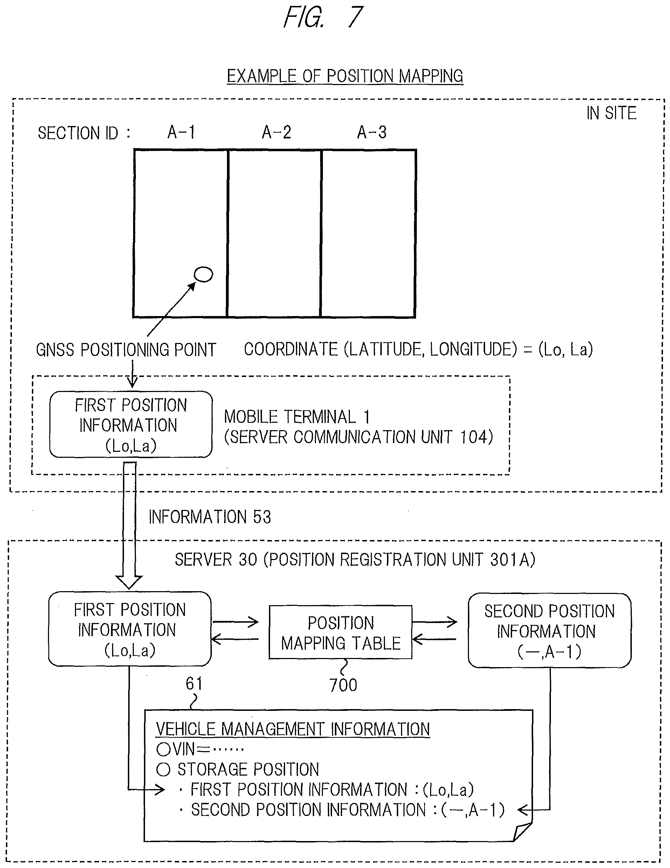

FIG 7 shows, as an example of position mapping, conversion between coordinate information of latitude and longitude by the GNSS positioning serving as the first position information, and the area ID and the section ID serving as the second position information. The server 30 associates the two kinds of position information by the position mapping and manages the associated position information in the vehicle management information 61 in the DB 60. The position registration unit 301A of the server 30 manages a position mapping table 700 together with the site management information 62. In the position mapping table 700, information associating the first position information and the second position information is described. For example, for each section, the section ID, the position coordinate of points at the four corners defining the region of the section, the position coordinate of the center point, the size, and the like are described. The position registration unit 301A converts the coordinate information of latitude and longitude that is the first position information, into the section ID or the like that is the second position information, according to the position mapping table 700.

In the first embodiment, the position mapping table 700 is retained in the server 30 to perform conversion. The present invention is not limited to this, and a similar position mapping table may be retained in the mobile terminal 1 to perform conversion. In that case, the information of the position mapping table is transmitted as needed from the server 30 to the mobile terminal 1.

In this example, there are sections having section IDs = A-1, A-2, A-3, and the like in the site. It is assumed that the coordinate that is the first position information obtained by positioning of the GNSS receiver 2 at a certain point in the site is (latitude, longitude) = (Lo, La). The mobile terminal 1 transmits the information 53 including the first position information to the server 30. The server 30 converts the coordinate (Lo, La) that is the first position information into the section ID = A-1 that is the second position information, according to the position mapping table 700. The server 30 registers the first position information and the second position information in the storage position of the vehicle management information 61, in association with each other. The area ID can be similarly converted. A position coordinate range can be also obtained from the section ID or the like, with the position mapping table 700, as reverse direction conversion.

### [Operation Instructions]

In the first embodiment, operation instructions of the vehicle movement operation can be various types of instructions as follows. (1) An operation instruction in which the VIN of the target vehicle, the movement origin position, and the movement destination position are specified. Each position is indicated by the second position information. Confirmation of the VIN is made on the server 30 side. (2) An operation instruction in which the movement origin position and the movement destination position are specified. Each position is indicated by the second position information. The number of target vehicles may be one or more. For example, an operation of moving all vehicles in a specified area as targets may be also performed.

(3) An operation instruction in which only the movement origin position is specified. The position is indicated by the second position information. The operator W1 moves the vehicle in the specified area or section to an arbitrary position. (4) An operation instruction in which only the movement destination position is specified. The position is indicated by the second position information. The operator W1 moves an arbitrary vehicle to a specified area or section. (5) An operation instruction in which the target vehicle, the movement origin position, the movement destination position, and the like are arbitrary. In other words, an operation mode in which there is no detailed operation instruction. The operator W1 moves an arbitrary vehicle at an arbitrary position to an arbitrary position for the purpose of creating an empty space or the like. However, the VIN, the storage position, and the like need to be registered in the DB 60 in advance.

Also, a specific operator W1 can be caused to perform a specific operation by associating the operation ID, the VIN, the terminal ID, and the like with each other in the operation instruction. Otherwise, an arbitrary operator W1 can be caused to perform a specific operation by not associating them.

### [Operation Management Function]

The system of the first embodiment has an operation management function realized by the server 30 and the operation history information 64. The operation management function is a function of managing a plurality of operations and a plurality of operators including the operation state and history. The control unit 301 grasps when, by which operator, what operation is performed at which position, in what kind of operation state, what operation has been performed, and the like, and records the information in the operation history information 64. The control unit 301 continuously grasps the state and the history of each operation and each operator and makes the state and the history be trackable.

Regarding the operation management function, the control unit 301 performs a process by using the terminal ID (= operator ID) included in the information 53 from the mobile terminal 2. The server 30 grasps the operator ID associated with the terminal ID in association with other information such as the operation ID and the operation state. Accordingly, the server 30 can grasp progress status, result, and the like of the vehicle movement operation for each operator, and can track the operation and the state of the operator W1 afterwards and at all time.

The administrator can realize operator service management, data analysis, and the like by using the operation management function and the operation history information 64, and can perform the vehicle logistics service more efficiently. As data analysis, for example, a graph of time required for the vehicle movement operation, or the like can be created and displayed. This can contribute to improvement in operation efficiency and the like. Note that the operation management function is not essential. In the case of this mode, the control unit 301 does not record the operation history information 64 and does not grasp the association of the operation ID, the terminal ID, and the like.

### [Vehicle Getting on and off Determination]

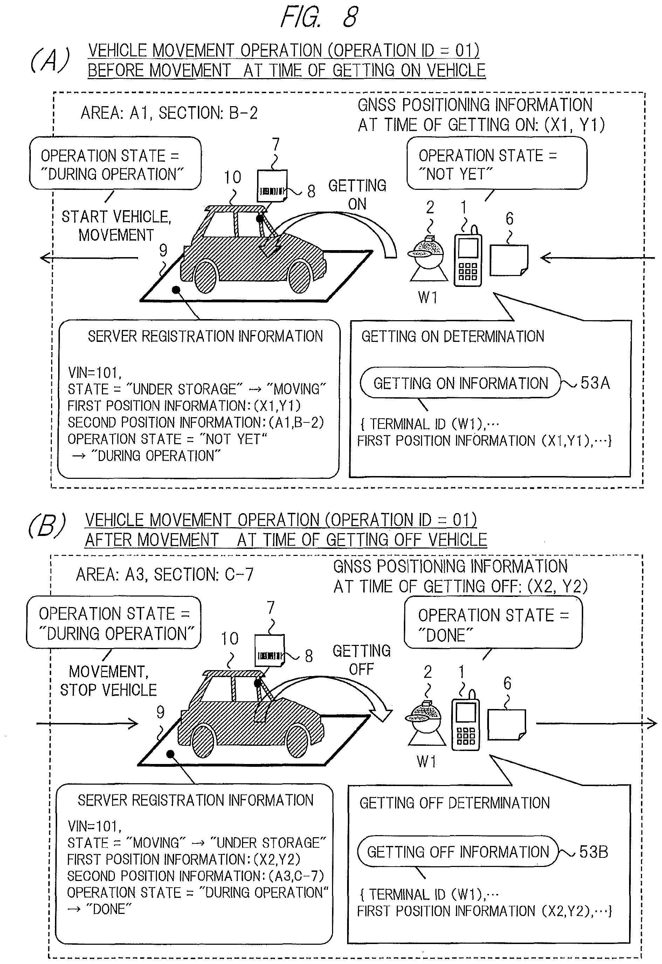

(A) in FIG 8 shows an example of the vehicle movement operation at the time of getting on the vehicle before the vehicle movement, and (B) in FIG 8 shows an example of the vehicle movement operation at the time of getting off the vehicle after the vehicle movement. It is assumed that the operation ID of a vehicle movement operation is set to "01". It is assumed that an operator ID = terminal ID of an operator W1 is set to "w1".

In (A) of FIG 8, the vehicle 10 having VIN = 101 is stored at the position of the predetermined region 9 in the site. This storage position is the area A1 and the section B-2 as the second position information, corresponding to FIG 5. In the DB 60, the storage position has already been registered. Also, a value of the "state" of this vehicle 10 is "under storage". It is assumed that one vehicle movement operation for the vehicle 10 as a target is performed by an operator W1. Initially, a value of the "operation state" of this operation is "not yet".

In response to the operation instruction, the operator W1 goes to the illustrated storage position corresponding to the movement origin position. The operator W1 gets on the target vehicle in a state where the mobile terminal 1 and the GNSS receiver 2 are equipped. At this time of getting on the vehicle, the mobile terminal 1 and the GNSS receiver 2 automatically perform getting on determination based on the positioning.

The GNSS receiver 2 measures own position based on the radio waves from the satellite and obtains latitude and longitude information that is the first position information. This first position information is associated with the current position of the mobile terminal 1, the operator W1, and the vehicle 10 that is moved by the operator W1. The first position information is, for example, the coordinate (X1, Y1). The mobile terminal 1 performs getting on determination described later by using the first position information obtained from the GNSS receiver 2, and when determining that the operator W1 has got on the vehicle, the mobile terminal 1 transmits the getting on information 53A as predetermined information 53 to the server 30. The getting on information 53A includes the terminal ID of the mobile terminal 1 and the first position information measured by the GNSS receiver 2 at the time of getting on the vehicle.

The server 30 grasps a state where the operator W1 at an actual pre-movement position corresponding to the movement origin position of the operation instruction of the vehicle movement operation has got on the vehicle, based on the getting on information 53A received from the mobile terminal 1 and the information of the DB 60. That is, the server 30 grasps the state where the operator W1 having the operator ID = w1 has got on the vehicle having VIN = 101 with respect to the operation having the operation ID = 01.

The operator W1 drives the vehicle to move the vehicle to the movement destination position specified in the operation instruction. The movement destination position is, for example, the area A3 and the section C-7 as the second position information.

In (B) in FIG 8, the operator W1 stops the vehicle at the actual post-movement position corresponding to the movement destination position and gets off the vehicle. At this time of getting off the vehicle, the mobile terminal 1 and the GNSS receiver 2 automatically perform getting off determination based on the positioning. The GNSS receiver 2 performs positioning of own position based on the radio waves from the satellite and obtains the first position information. For example, the coordinate (X2, Y2) is the first position information. When the mobile terminal 1 performs getting off determination described later by using the first position information, and when determining that the operator W1 has got off the vehicle, the mobile terminal 1 transmits the getting off information 53B to the server 30 as the predetermined information 53. The getting off information 53B includes the terminal ID of the mobile terminal 1 and the first position information of which positioning has performed by the GNSS receiver 2 at the time of getting off the vehicle.

The server 30 grasps a state where the operator W1 at the actual post-movement position corresponding to the movement destination position of the operation instruction of the vehicle movement operation has got off the vehicle, based on the getting off information 53B received from the mobile terminal 1 and the information in the DB 60. That is, the server 30 grasps the state where the operator W1 having the operator ID = w1 gets off the vehicle having VIN = 101 with respect to the operation having the operation ID = 01.

### [Sequence]

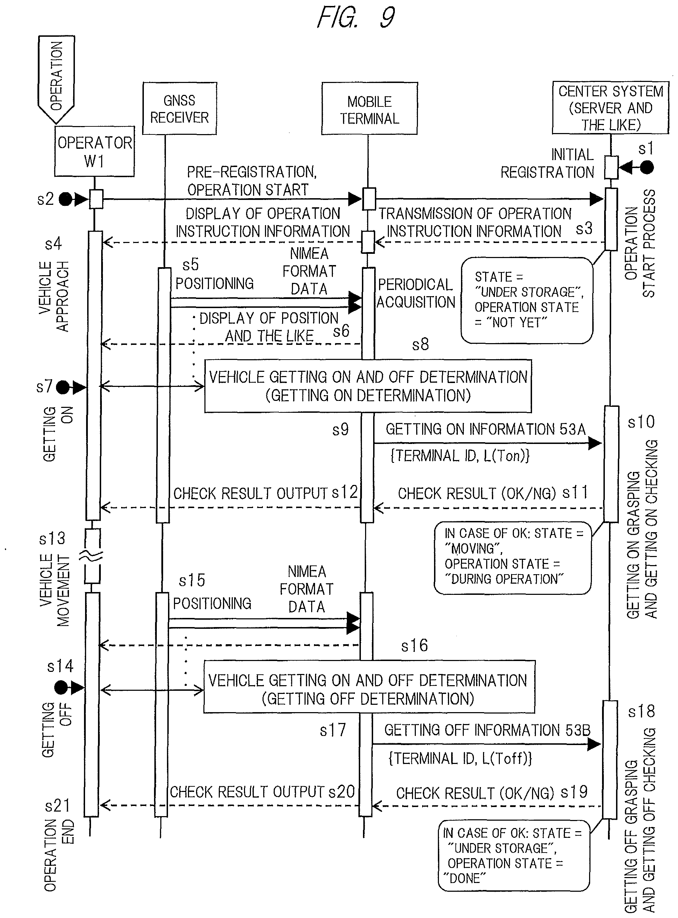

FIG 9 shows a sequence of overall processes in the first embodiment, and shows a sequence including an operation of the operator W1, communication between elements such as the mobile terminal 1, the GNSS receiver 2, and the server 30 of the center system 3, and the like. Steps s1 to s21 composing the sequence of FIG 9 are included. The steps will be described below in order of the steps.

(s1) The vehicle is carried in the site by receiving and is stored. Initial registration of information such as the VIN, the attribute, and an initial storage position of the vehicle in the site is performed in the vehicle management information 61, and the like in the DB 60 of the server 30 of the center system 3 in advance, by the administrator. The initial storage position is at least one of the first position information or the second position information, and in the present example, the initial storage position is an area ID or a section ID that are the second position information. Also, necessary information such as the configuration of the area and the section has already been set in the DB 60 in advance.

The center system 3 receives information and instruction regarding receiving and delivery from the host system or the like. The administrator stores necessary information in the DB 60 of the server 30 based on the information, creates operation instruction information based on the information when the vehicle movement operation is required, and stores the operation instruction information in the operation instruction information 63 in the DB 60.

The administrator passes the mobile terminal 1 and the GNSS receiver 2 as the operator system, to the operator W1. The administrator or the operator W1 turns on the power supply and the function of the mobile terminal 1 and the GNSS receiver 2. The operator W1 equips the mobile terminal 1 and the GNSS receiver 2 to himself/herself Basically, the operator W1 does not need to operate the mobile terminal 1 and the GNSS receiver 2 during the operation.

(s2) Also, the operator W1 registers the operator ID and the like in the DB 60 of the server 30 of the center system 3 through the mobile terminal 1 in advance, based on guidance and instruction from the administrator. At this time, the operator ID and the terminal ID are registered in the DB 60, in association with each other.

When the vehicle movement operation is performed by the operator W1, in the server 30, an operation start process is performed. The operator W1 inputs operation start to the mobile terminal 1, and the mobile terminal 1 transmits information of the operation start to the server 30. The server 30 receives the information from the mobile terminal 1 and performs the pre-registration and the operation start process. Note that the administrator may perform the pre-registration to the server 30, instead of the operator W1. When operator operation management is unnecessary, registration and grasping of the operator ID can be omitted.

(s3) The administrator outputs the operation instruction in the form of operation instruction sheet 6 or the operation instruction information to the screen of the mobile terminal 1, based on the operation instruction information 63. FIG 9 particularly shows a case where the operation instruction information is displayed on the screen of the mobile terminal 1. The server 30 or the PC 31 transmits the operation instruction information to the mobile terminal 1 based on an operation of the administrator. The mobile terminal 1 displays the received operation instruction information on the screen. The operator W1 sees the operation instruction sheet 6 or the operation instruction information on the screen of the mobile terminal 1 to recognize contents of the vehicle movement operation to be performed by himself/herself. In the operation instruction sheet 6 or the operation instruction information on the screen, the movement origin position, the movement destination position, and other information may be displayed on the map of the site. Also, the operation instruction information may be output by sound from the server 30 to the mobile terminal 1.

(s4) The operator W1 performs approach to and search for the target vehicle at the specified movement origin position in order to perform the operation in accordance with the operation instruction. The operator W1 goes to the specified area or section and finds the vehicle stored at that position.

Note that a procedure for confirming, by predetermined means, whether the vehicle stored in the position is the movement target vehicle by the operator W1 may be further provided. For example, the operator W1 may visually check information such as the VIN described in the medium 7 attached to the vehicle 10. When the VIN of the medium 7 matches the VIN described in the operation instruction information, the operator W1 can confirm that the vehicle is the movement target vehicle. Note that, even if this procedure is omitted, there is no problem, since the VIN is confirmed on the server 30 side.

(s5) The GNSS receiver 2 periodically performs positioning, in the ON state. The GNSS receiver 2 obtains NMEA format data based on the radio wave received from the GNSS satellite 4 and outputs the NMEA format data to the mobile terminal 1. The NMEA format data is continuously output from the GNSS receiver 2 at regular intervals after the GNSS receiver 2 is turned ON. The mobile terminal 1 inputs the NMEA format data from the GNSS receiver 2 by the position information acquisition unit 101 and acquires the NMEA format data as the position information 51. The mobile terminal 1 uses predetermined information in the obtained NMEA format data.

(s6) The mobile terminal 1 displays the current position of the mobile terminal 1 and the operator W1 on the screen of the mobile terminal 1 based on the NMEA format data that is the first position information from the GNSS receiver 2. The current position, the movement origin position of the target vehicle, and the like are displayed on the screen, for example, on the map of the site. Accordingly, the operator W1 can confirm the positional relation thereof easily on the screen, and can perform approach to and search for the target vehicle more easily. The step s6 can be omitted.

(s7) When the operator W1 finds the target vehicle at the movement origin position, the operator W1 gets on the vehicle. In this case, the operator W1 basically does not need to operate the mobile terminal 1 and the GNSS receiver 2, and the operator W1 does not perform any operation in the first embodiment. In the first embodiment, a motion of reading the code 8 of the medium 7 of the vehicle 10 is also unnecessary.

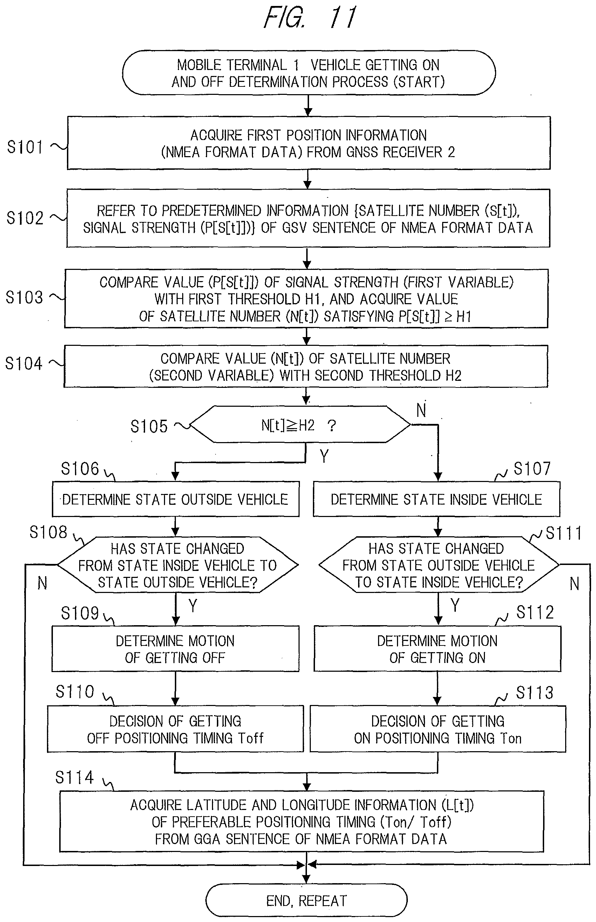

(s8) The mobile terminal 1 performs vehicle getting on and off determination by the vehicle getting on and off detennination unit 103 at all times in cooperation with the GNSS receiver 2, in a function ON state. At the step s7, the operator system automatically performs the getting on determination of the step s8. The vehicle getting on and off determination of the step s8 includes the following getting on determination. Details will be described in FIG 11 described later.

The vehicle getting on and off determination unit 103 of the mobile terminal 1 determines whether the operator W1 has got on the vehicle, by deciding difference in the GNSS positioning information inside and outside the vehicle by using the first position information from the GNSS receiver 2. The vehicle getting on and off determination unit 103 performs the decision by arithmetic processing using predetermined information such as a satellite number, and a signal strength in the NMEA format data of periodic output at the step s5. The obtained information can fluctuate at every time point ("t") of positioning and obtaining of the periodic output data. The vehicle getting on and off determination unit 103 decides a preferable "getting on positioning timing" (Ton) for position registration, and extracts latitude and longitude information (L[Ton]) that is the first position information at that time.

(s9) When "getting on" is determined at the step s8, the mobile terminal 1 performs a predetermined process with the server 30. The mobile terminal 1 transmits the getting on information 53A that is the predetermined information 53, to the server 30. The getting on information 53A is information for notifying that the operator W1 has got on the target vehicle. The getting on information 53A includes the terminal ID of the mobile terminal 1 and latitude and longitude information (L[Ton]) at the getting on positioning timing of the step s8 as the first position information.

(s10) The server 30 refers to, compares, and confirms the getting on information 53A received from the mobile terminal 1 and the registered information of the DB 60 by the position registration unit 301A, to perform a predetermined decision for grasping the target vehicle, the position, the operator W1, and the like of the vehicle movement operation. Accordingly, the server 30 grasps a state where the operator W1 has got on the target vehicle in the pre-movement position corresponding to the movement origin position. That is, the server 30 grasps when the operator W1 having which terminal ID (= operator ID) has got on the vehicle having which VIN at which position, in association with each other. At this time, the position registration unit 301A performs position mapping.

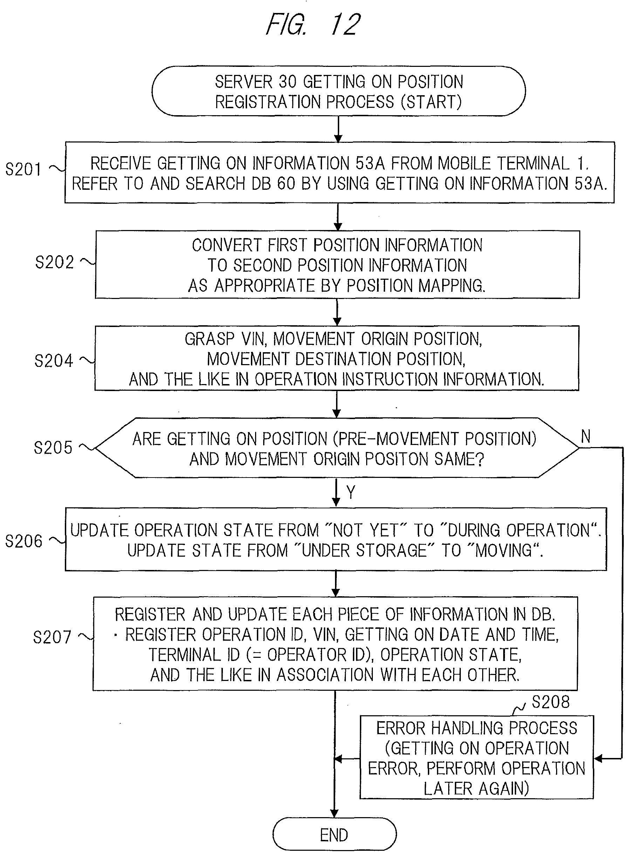

Also, at the same time, the position registration unit 301A also decides whether the operation is correct or incorrect by performing a getting on check as to whether getting on is correct. The server 30 performs the getting on check with respect to the vehicle position indicated by the first position information from the mobile terminal 1 by comparison and determination of the stored vehicle around the vehicle position and the second position information. The position registration unit 301A of the server 30 decides whether the position indicated by latitude and longitude information (L[Ton]) of the getting on positioning timing from the mobile terminal 1 is the nearest to the area ID or the section ID that is the movement origin position of the target vehicle in the operation instruction. Details will be described in FIG 12 described later.

The position registration unit 301Aupdates each piece of information in the DB 60 when it is decided that the getting on is correct, as a result of the getting on check. As shown in (A) in FIG 8, the position registration unit 301A updates a value of the operation state in the operation of the corresponding operation ID in the operation instruction information 63, from "not yet" to "during operation", and updates the value of the state of the corresponding vehicle in the vehicle management information 61, from "under storage" to "moving". Also, the position registration unit 301A records the operation history reflecting the getting on state in the operation history information 64 based on the operation instruction information 63.

When it is decided that the getting on is incorrect as a result of the getting on check, the position registration unit 301A grasps the operation state as an error, and causes the operation to be performed later again, or transmits an alert indicating incorrectness, to the mobile terminal 1, and causes the operation to be performed again immediately, as described later. The incorrect getting on is a case where the operator W1 has got on a vehicle that is different from the target vehicle of the operation instruction, and the like.

(s11, s12) At the step s11, the server 30 transmits the result of the getting on check of the step s10 to the mobile terminal 1. The result is information indicating the correct getting on (OK) or the incorrect getting on (NG). At the step s12, the mobile terminal 1 may display the received result on the screen or output by sound. For example, sound may be output like "the operator has got on target vehicle". In this case, the operator W1 can recognize whether the getting on at the step s7 is correct. The steps s11 and s12 can be omitted.

(s13, s14) At the step s13, the operator W1 drives the vehicle which the operator W1 has got on, and moves the vehicle from the movement origin position of the operation instruction to the movement destination position. At the step s14, the operator reaches the movement destination position, stops the vehicle, and gets off the vehicle.

(s15) At the step s15, the NMEA format data by positioning is periodically transmitted from the GNSS receiver 2 to the mobile terminal 1 similarly to the step s5. The mobile terminal 1 displays the current position and the like on the screen.

(s16) Similarly to the step s8, the mobile terminal 1 performs the vehicle getting on and off determination by the vehicle getting on and off determination unit 103. At the step s14, the operator system automatically performs getting off determination of the step s16. The step s16 includes the getting off determination as follows. Details will be described in FIG 11 described later.

The vehicle getting on and off determination unit 103 of the mobile terminal 1 determines whether the operator W1 has got off the vehicle, by deciding difference in the GNSS positioning information inside and outside the vehicle by using the first position information from the GNSS receiver 2. The vehicle getting on and off determination unit 103 performs the decision by arithmetic processing using predetermined information such as a satellite number, and a signal strength in the NMEA format data of periodic output of the step s15. The vehicle getting on and off determination unit 103 decides a preferable "getting off positioning timing" (Toff) for position registration, and extracts latitude and longitude information (L[Toff]) that is the first position information at that time.

(s17) When "getting off" is determined at the step s16, the mobile terminal 1 transmits the getting off information 53B that is the predetermined information 53, to the server 30. The getting off information 53B is information for notifying that the operator W1 has got off the target vehicle. The getting off information 53A includes the terminal ID and the latitude and longitude information (L[Toff]) of the getting off positioning timing of the step s16, as the first position information.

(s18) The server 30 refers to, compares, and confirms the getting off information 53 received from the mobile terminal 1 and the registered information in the DB 60 by the position registration unit 301A, to perform a predetermined decision for grasping the position and the like of the vehicle movement operation. Accordingly, the server 30 grasps a state where the operator W1 has got off the target vehicle in the post-movement position corresponding to the movement destination position. That is, the server 30 grasps when the operator W1 having which terminal ID (= operator ID) has got off the vehicle having which VIN at which position, in association with each other. At this time, the position registration unit 301A performs position mapping.

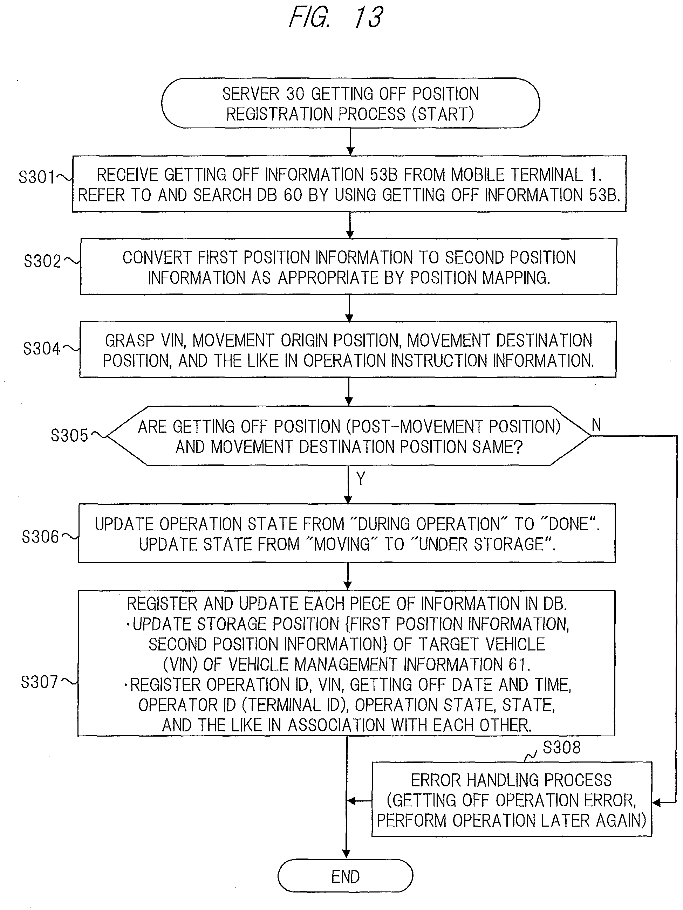

In addition, at the same time, the position registration unit 301A also decides whether the operation is correct or incorrect by performing a getting off check as to whether the getting off is correct. The server 30 performs the getting off check with respect to the vehicle position indicated by the first position information from the mobile terminal 1 by comparison and determination of the stored vehicle around the vehicle position and the second position information. The position registration unit 301A decides whether the position indicated by latitude and longitude information (L[Toff]) of the getting off positioning timing from the mobile terminal 1 is the nearest to the area ID or the section ID that is the movement destination position of the target vehicle in the operation instruction. Details will be described in FIG 13 described later.

The position registration unit 301A updates each piece of information in the DB 60 when it is decided that the getting off is correct, as a result of the getting off check. In the vehicle management information 61, the server 30 registers the first position information and the second position information corresponding to the storage position after the movement, with respect to the VIN of the target vehicle. As shown in (B) in FIG 8, the position registration unit 301A updates the value of the operation state in the operation of the corresponding operation ID in the operation instruction information 63, from "during operation" to "done", and updates the value of the state of the corresponding vehicle in the vehicle management information 61, from "moving" to "under storage". The position registration unit 301Arecords the operation history reflecting the getting off state in the operation history information 64 based on the operation instruction information 63.

When it is decided that the getting off is incorrect as a result of the getting off check, the position registration unit 301A grasps the operation state as an error, and causes the operation to be performed later again, or transmits an alert indicating incorrectness, to the mobile terminal 1, and causes the operation to be performed again immediately, as described later. The incorrect getting off is a case where the operator W1 has got off at a different position from the movement destination position of the operation instruction, and the like.

(s19, s20) At the step s19, the server 30 transmits the result of the getting off check of the step s18 to the mobile terminal 1. The result is information indicating the correct getting off (OK) or the incorrect getting off (NG). At the step s20, the mobile terminal 1 may display the received result on the screen or output by sound. In this case, the operator W1 can recognize whether the getting off at the step s14 is the correct getting off. The steps s19 and s20 can be omitted.

(s21) The operator W1 ends one vehicle movement operation, and moves to next operation if there is the next operation. When there is the next operation, operation repeats from the step s2 or the step s4 similarly. Note that, at the step s3, the operation instruction of a plurality of vehicle movement operations may be collectively imparted to the operator W1. In the case of completion of the operation, the operator W1 returns to the center system 3, returns the operator system, and turns off the power supply and the function. As a result of the vehicle movement operation described above, for the vehicle of which storage position has already been registered in the DB 60, the storage position can be searched by using the search function of FIG 3, and the vehicle can be quickly found when necessary.

As described above, the mobile terminal 1 and the server 30 grasp states at at least two time points including at a time point of getting on and at a time point of getting off, continuously grasp the vehicle movement operation on a time axis from these pieces of information, and automatically register the storage position after the change in the DB 60.

As a modification, a getting on check that is similar to the step s10 may be performed on the mobile terminal 1 side. In that case, information for the getting on check, that is, the position information and the like of the surrounding stored vehicle with respect to the position of the target vehicle, is transmitted from the server 30 to the mobile terminal 1 in advance. For example, the information may be transmitted in advance together with initial operation instruction information. The mobile terminal 1 performs the getting on check together with the getting on determination at the step s8, and transmits the getting on information 53A to the server 30 when determining the correct getting on. Accordingly, the server 30 grasps the getting on state and registers the getting on state in the DB 60. Similarly, the getting off check at the step s18 may be also performed on the mobile terminal 1 side. The mobile terminal 1 performs the getting off check together with the getting off determination of the step s16, and transmits the getting off information 53B to the server 30 when determining the correct getting off.

### [First Position Information_NMEA Format Data]

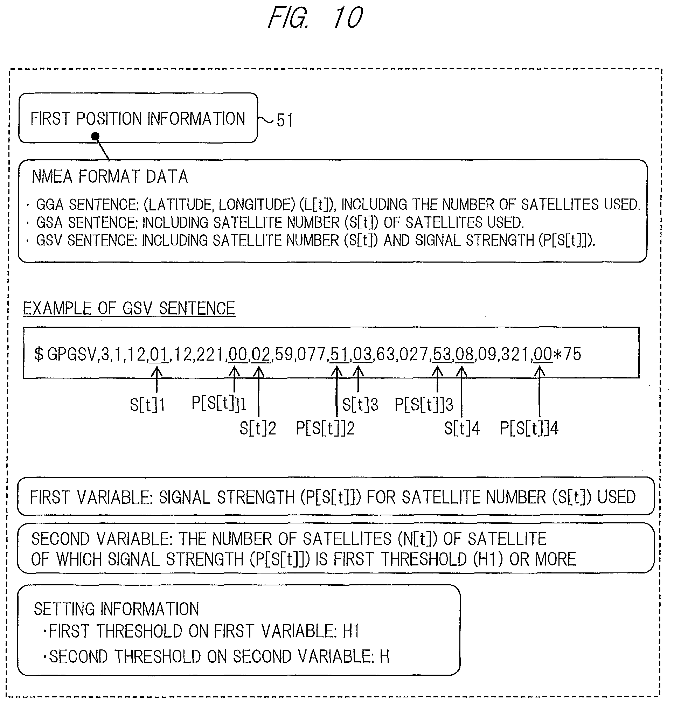

FIG 10 shows the NMEA format data in the GNSS positioning information that is the first position information, and the information used in the vehicle getting on and off determination. The NMEA stands for National Marine Electronics Association. The NMEA format data includes sentences such as GGA, GSA, and GSV.

The GGA sentence is information including positioning time, latitude, longitude, altitude, a positioning method, the number of satellites used (total number of satellites captured: the number of satellites captured and used in positioning), horizontal dilution of precision (HDOP), and the like. In the first embodiment, at least latitude and longitude information (L[t]) in the GGA sentence and the number of satellites used are used. However, other information may further be used. The GSA sentence is information including a satellite number (S[t]) of satellites used that are captured in positioning and dilution of precision (DOP). The GSV sentence is information including the satellite number (S[t]) of the satellite used, a satellite position (an elevation angle, an azimuth angle), a signal strength (a signal noise rate), and the like. The signal strength is expressed particularly by a carrier noise ratio (C/N, a value is 00 to 99 [dB]). In the first embodiment, at least the satellite number (S[t]) and the signal strength (P[S[t]]) in the GSV sentence are used. However, other information may further be used.

An example of the GSV sentence is shown in FIG 10. Numerical values of underlined parts are satellite numbers (indicated by S[t]1 to S[t]4) and signal strengths (indicated by P[S[t]]1 to P[S[t]]4). In this example, information on four satellites used is included. The satellites are a first satellite (S[t]1 = 01), a second satellite (S[t]2 = 02), a third satellite (S[t]3 = 03), and a fourth satellite (S[t]4 = 08). Values of signal strengths of the respective satellites are 00, 51, 53, and 00 [dB].

The signal strength (P[S[t]]) for each satellite number (S[t]) in the satellite used that is captured by positioning is used in the vehicle getting on and off determination process (FIG. 11 described later). As a first variable, the signal strength (P[S[t]]) for each satellite number (S[t]) is set As a second variable, the number of satellites (N[t]) of the satellite of which the signal strength (P[S[t]]) is a first threshold (H1) or more.

The server 30 and the mobile terminal 1 have the first threshold (H1) for determination on the first variable, and a second threshold (H2) for determination on the second variable, as setting information for the vehicle getting on and off determination. The setting information can adopt the user setting described above. The first threshold H1 and the second threshold H2 may be designed as below. Positioning outside the vehicle and positioning inside the vehicle are performed in advance by using the GNSS receiver 2, and the NMEA format data of each positioning is collected. An optimum threshold for the vehicle getting on and off determination is determined by using values such as the GSV sentence in the collected data.

### [Process Flow_Mobile Terminal_Vehicle Getting on and off Determination]

FIG 11 shows a process flow of the mobile terminal 1 corresponding to the vehicle getting on and off determination of the step s8 and the step s16 in FIG 9. In FIG 11, steps S101 to S114 are included. The steps will be described below in order of the steps.

(S101) The position information acquisition unit 101 of the mobile terminal 1 acquires the NMEA format data that is the first position information periodically output from the GNSS receiver 2.

(S102) The vehicle getting on and off determination unit 103 refers to the satellite number (S[t]) and the signal strength (P[S[t]]) of the satellite used in FIG 10 from the GSV sentence of the NMEA format data, as predetermined information. Areference character "t" represents a time point for each positioning and periodic output.

(S103) The vehicle getting on and off determination unit 103 compares the signal strength (P[S[t]]) that is the first variable with the first threshold HI, and decides whether a relation P[S[t]] ≥ H1 is satisfied as a condition. The vehicle getting on and off determination unit 103 obtains the value of the number of satellites used (N[t]) that satisfies the relation P[S[t]] ≥ H1 as the value of the second variable.

(S104 to S107) At the step S104, the vehicle getting on and off determination unit 103 compares the value of the number of satellites (N[t]) that is the second variable, with the second threshold H2. At the step S105, the vehicle getting on and off determination unit 103 decides whether a relation N[t] ≥ H2 is satisfied as a condition, and proceeds to the step S106 when the relation N[t] ≥ H2 is satisfied (S105-Y), and proceeds to the step S107 when a relation N[t] < H2 is satisfied (S105-N). At the step S106, the vehicle getting on and off determination unit 103 decides that the operator W1 is outside the vehicle. At the step S107, the vehicle getting on and off determination unit 103 decides that the operator W1 is inside the vehicle.

For example, in a case of the GSV sentence of FIG. 10, in a case of the first threshold H1 = 50, there are the second satellite and the third satellite as satellites where the value of P[S[t]] is H1 or more, and a relation N[t] = 2 is satisfied. For example, in a case of H2 = 2, a relation N[t] ≥ H2 is satisfied, and it is decided that the state is outside the vehicle.

(S108 to S109) After the step S106, at the step S108, the vehicle getting on and off determination unit 103 decides whether the state has changed from the state inside the vehicle to the state outside the vehicle. When the state has changed from the state inside the vehicle to the state outside the vehicle (S108-Y), the process proceeds to the step S109. At the step S109, the vehicle getting on and off determination unit 103 determines a motion of getting off, that is, that the operator W1 has got off the target vehicle.

At the steps S108 and S111, in order to improve determination accuracy, the following process may be performed. At the step S108, the vehicle getting on and off determination unit 103 determines a motion of getting off at the step S109 when the state is changed from the state inside the vehicle to the state outside the vehicle and the state outside the vehicle continues for a certain time. Similarly, at the step S111, the vehicle getting on and off determination unit 103 determines a motion of getting on at the step S112 when the state is changed from the state outside the vehicle to the state inside the vehicle and the state inside the vehicle continues for a certain time. By this process, erroneous determination can be eliminated even when the operator W1 has tried to get on but has stopped it, or the like.

(S110) At the step S110, the vehicle getting on and off determination unit 103 determines a "getting off positioning timing" (Toff) that is information indicating a preferable positioning timing at the time of getting off. Specifically, the vehicle getting on and off determination unit 103 selects a time point of high positioning accuracy in the predetermined period including the positioning time point corresponding to the getting off determination, and determines the time point to be the getting off positioning timing Toff.

(S111 to S112) After the step S107, at the step S111, the vehicle getting on and off determination unit 103 decides whether the state has changed from the state outside the vehicle to the state inside the vehicle, and the process proceeds to S112 when the state has changed from the state outside the vehicle to the state inside the vehicle (S111-Y). At the step S112, the vehicle getting on and off determination unit 103 determines a motion of getting on, that is, that the operator W1 has got on the target vehicle.

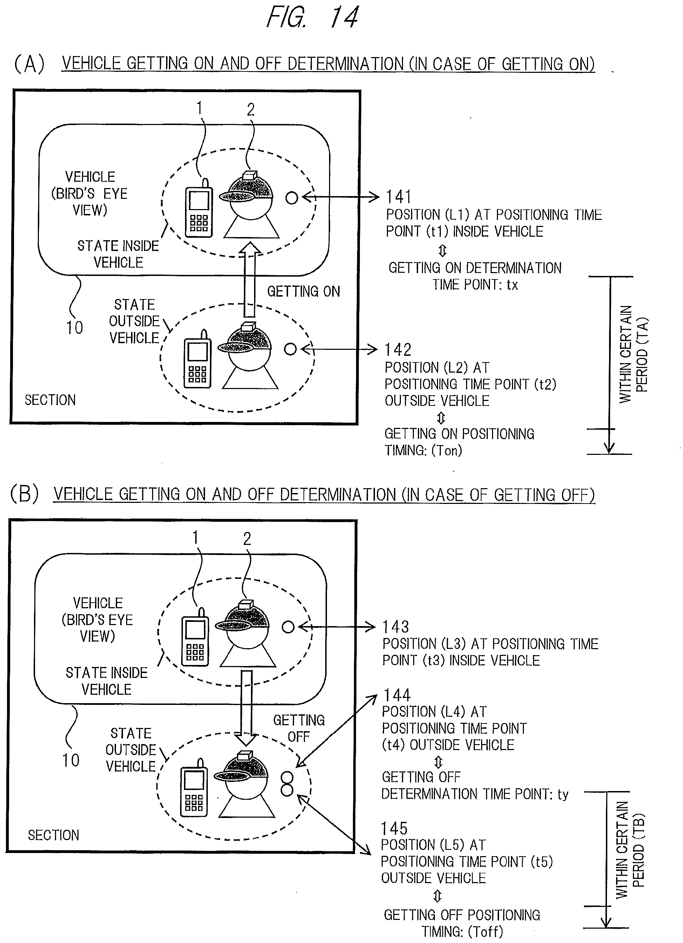

(S113) At the step S113, the vehicle getting on and off determination unit 103 determines a "getting on positioning timing" (Ton) that is information indicating a preferable positioning timing at the time of getting on. Specifically, the vehicle getting on and off determination unit 103 selects a time point of high positioning accuracy in the predetermined period including the positioning time point corresponding to the getting on determination, and determines the time point to be the getting on positioning timing Ton. Processes of the step S110 and the step S113 are shown in FIG. 14 described later.

(S114) After the step S112 or the step S113, at the step S114, the vehicle getting on and off determination unit 103 acquires latitude and longitude information (L[t] = L[Toff] or L[Ton]) that is the first position information at the time point of the getting off positioning timing Toff of the step S112 or the getting on positioning timing Ton of the step S113, from the GGA sentence of the NMEA format data. The server communication unit 104 uses the latitude and longitude information (L[t]) as the first position infonnation to be stored in the predetermined information 53.

As described above, in the vehicle getting on and off determination process according to the first embodiment, at least the state outside the vehicle and the state inside the vehicle are distinguished by deciding difference in the GNSS positioning accuracy inside and outside the vehicle, and determines operations of getting on and off based on the change in the state.

### [Process Flow_Server_Registration of Getting on Position]

FIG 12 shows a process flow of position registration at the time of getting on the vehicle, by the server 30 corresponding to the getting on check at the step s10 in FIG 9. In FIG. 12, steps S201 to S208 are included. The steps will be described below in order of the steps. The process in FIG 12 starts from a state where the terminal ID and the operation ID of the operation instruction are associated with each other as a premise. Such information has already been registered in the operation instruction information 63.

(S201) When the server 30 receives the getting on information 53A based on the process of FIG 11 from the mobile terminal 1, the server 30 performs the process below. The position registration unit 301A refers to and searches the vehicle management information 61 and the operation instruction information 63 in the DB 60 by using the terminal ID of the getting on information 53A and the first position information.

(S202) The position registration unit 301A converts the first position information to the second position information as appropriate by the position mapping described above.

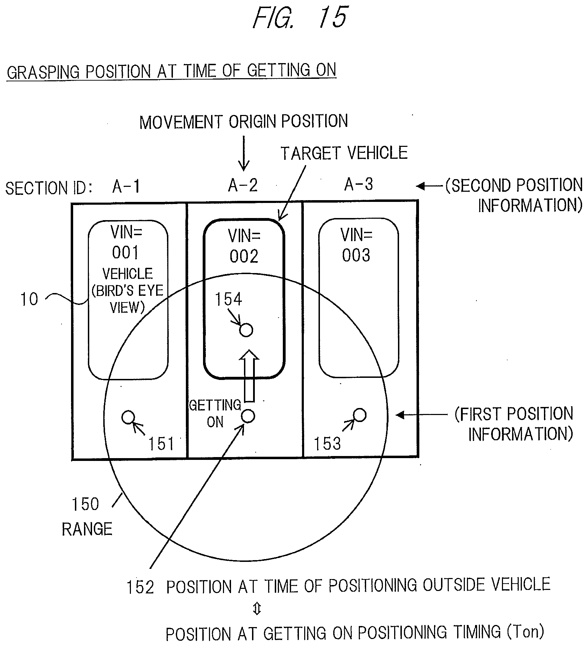

(S204) The position registration unit 301A refers to the operation instruction information 63 corresponding to the corresponding operation from the operation instruction information 63 in the DB 60 by using the terminal ID of the getting on information 53A. The position registration unit 301A grasps the VIN of the target vehicle, the movement origin position, the movement destination position, the operation state, and the like in the operation instruction information 63. The position registration unit 301A decides the area ID and the section ID of the second position information that is the nearest to the coordinate indicated by the first position information of the getting on information 53A. The position registration unit 301A decides the VIN of the vehicle that has been stored in the position indicated by the second position information. The position registration unit 301A grasps the VIN of the vehicle in the storage position as a target vehicle in the pre-movement position corresponding to the movement origin position in association with other information. Note that grasping at that time may be performed as specifically shown in FIG 15 described later.

(S205) The position registration unit 301A decides whether the getting on position (the pre-movement position indicated by the first position information, the second position information by the position mapping at the step S202) by the getting on information 53A, and the movement origin position of the operation instruction at the step S204 are the same. When it is decided to be the same (S205-Y), the process proceeds to the step S206. When it is decided to be not the same (S205-N), the process proceeds to the step S208.

(S206) The position registration unit 301A updates the value of the operation state of the operation instruction information 63, from "not yet" to "during operation", and updates the value of the state of the vehicle in the vehicle management information 61, from "under storage" to "moving".

(S207) The position registration unit 301A registers and updates each piece of information in the DB 60. The position registration unit 301A grasps the operation ID, the terminal ID (= operator ID), the getting on date and time, the VIN of the target vehicle, the operation state "during operation", the state "moving", and the like in association with one another. At this point, the server 30 is in a state of waiting for subsequent getting off information 53B corresponding to the getting on information 53A.

(S208) The position registration unit 301A performs an error handling process corresponding to an error of the operation at the time of getting on. The position registration unit 301A grasps the operation state of the corresponding operation as an "error", and issues an operation instruction later on this operation and to cause the operation to be performed again. Alternatively, at a time point when it is decided that the operation is the "error", the position registration unit 301A transmits alert information indicating the error of the operation, to the mobile terminal 1. Accordingly, the alert information is displayed on the screen of the mobile terminal 1, or an alert is output by sound to notify the operator W1 of the error of the operation and urge the operator W1 to perform the operation again.

### [Process Flow_Server_Registration of Getting off Position]

FIG 13 shows a process flow of position registration at the time of getting off, by the server 30 corresponding to the getting off check of the step s16 in FIG 9. In FIG 13, steps S301 to S308 are included. The steps will be described below in order of the steps. The process in FIG 13 starts from a state where the terminal ID and the operation ID of the operation instruction are associated with each other, and the operation state is "during operation", as a premise.

(S301) When the server 30 receives the getting off information 53B based on the process of FIG. 11 from the mobile terminal 1, the server 30 performs the process below. The position registration unit 301A refers to and searches the vehicle management information 61 and the operation instruction information 63 in the DB 60 by using the terminal ID of the getting off information 53B and the first position information.

(S302) The position registration unit 301A converts the first position information to the second position information as appropriate by the position mapping described above.

(S304) The position registration unit 301A refers to the operation instruction information 63 corresponding to the corresponding operation from the operation instruction information 63 in the DB 60 by using the terminal ID of the getting off information 53B. The position registration unit 301A grasps the VIN of the target vehicle, the movement origin position, the movement destination position, the operation state, and the like in the operation instruction information 63. The position registration unit 301A decides the area ID and the section ID that are the nearest to the coordinate indicated by the first position information. When the vehicle has not been stored in the position indicated by the second position information, the position registration unit 301A grasps the second position information in association with other information as the storage position after the change.

(S305) The position registration unit 301A decides whether the getting off position (the post-movement position indicated by the first position information, the second position information by the position mapping at the step S302) by the getting off information 53B, and the movement destination position of the operation instruction at the step S304 described above are the same. When it is decided to be the same (S305-Y), the process proceeds to the step S306. When it is decided to be not the same (S305-N), the process proceeds to the step S308.

(S306) The position registration unit 301A updates the value of the operation state of the operation instruction information 63, from "during operation" to "done", and updates the value of the state of the vehicle in the vehicle management information 61, from "moving" to "under storage".

(S307) The position registration unit 301A registers and updates each piece of information in the DB 60. The position registration unit 301A grasps the operation ID, the terminal ID (= operator ID), the getting off date and time, the VIN of the target vehicle, the operation state "done", the state "under storage", and the like in association with one another. At this point, the server 30 is in a state of grasping the end of one vehicle movement operation.

(S308) The position registration unit 301A performs an error handling process corresponding to an error of the operation at the time of getting off. The position registration unit 301A grasps the operation state of the corresponding operation as an "error", and issues an operation instruction later on this operation and to cause the operation to be performed again. Alternatively, at a time point when it is decided that the operation is the "error", the position registration unit 301A transmits alert information indicating the error of the operation, to the mobile terminal 1. Accordingly, the alert information is displayed on the screen of the mobile terminal 1, or an alert is output by sound to notify the operator W1 of the error of the operation and urge the operator W1 to perform the operation again.

The server 30 may further perform the following process. The server 30 decides whether a predetermined time has elapsed from the getting on date and time serving as the date and time when the getting on information 53A was received. When, even though the predetermined time has elapsed from the getting on date and time, the server 30 cannot receive the getting off information 53B of contents corresponding to the elapsing, the server 30 performs a predetermined error handling process at the step S308. For example, the server 30 decides an error of the operation, and inquires of the mobile terminal 1 of the terminal ID that has transmitted the getting on information 53A.

### [Vehicle Getting on and off Determination_Detail]

With reference to FIG 14, details of a vehicle getting on and off determination process will be described. (A) in FIG 14 schematically shows, in a bird's-eye view, a state in which the operator W1 gets on the vehicle 10 when one vehicle 10 is stored in a given section. Initially, the operator W1 and the operator system are in the state outside the vehicle, and become in the state inside the vehicle by the motion of getting on the vehicle 10. A point 141 indicates a position (L1) by GNSS positioning at the positioning time point (t1) in the state inside the vehicle immediately after getting on. A point 142 indicates a position (L2) by GNSS positioning at the positioning time point (t2) in the state outside the vehicle immediately before getting on. The positioning time point t1 is assumed to be the time point tx when getting on is determined.

In the vehicle getting on and off determination process according to the first embodiment, a process of deciding difference in GNSS positioning accuracy between inside and outside the vehicle 10 is performed. The GNSS receiver 2 can receive radio waves from the satellite and can perform positioning even in the state inside the vehicle in which the operator W1 has got on the vehicle 10. However, in general, when the GNSS receiver 2 is inside the vehicle than when the GNSS receiver 2 is outside the vehicle, the received radio wave levels and the like are lowered by the influence of radio waves being blocked or reflected by the vehicle body, and the positioning accuracy decreases. As a result, the value and the like of the signal strength of the GSV sentence in FIG 10 fluctuate. In the situation where the positioning accuracy is relatively low, the value of the signal strength becomes relatively low.

In view of this, in the vehicle getting on and off determination process of the first embodiment, getting on and getting off are determined by upward and downward fluctuation of the value of the signal strength and the like. Specifically, the state outside the vehicle having a high positioning accuracy, and the state inside the vehicle having a low positioning accuracy can be decided by the processes such as S103 to S105 in FIG 11, and the getting on or off can be determined, based on the change.

Also, in the vehicle getting on and off determination process according to the first embodiment, as in the steps S113 and S110 of FIG 11, the getting on positioning timing (Ton) and the getting off positioning timing (Toff) are obtained for preferable position registration. This is to use the first position information at the time point when the positioning accuracy is as high as possible, when the storage position in the DB 60 is registered and updated. Before and after the positioning time point (t1) corresponding to the time point (tx) when the getting on is determined, the state changes from the state outside the vehicle to the state inside the vehicle. In FIG 14, the position information (L1) corresponding to the positioning time point (t1) inside the vehicle shows an ideal point existing inside the vehicle, but actually, the point may be outside the vehicle due to a deviation in positioning. That is, when the position information (L1) corresponding to the positioning time point (t1) is used as the storage position to be registered in the DB 60, management accuracy of the storage position may be lowered.

Accordingly, in the first embodiment, the mobile terminal 1 refers to, as the point 141, for example, positioning information of each time point (t) in a past certain period (TA), with respect to the positioning time point (t1) corresponding to the time point (tx) when the getting on is determined. The first position information in which the positioning accuracy is as high as possible is adopted as the storage position to be registered in the DB 60.

In the example of (A) in FIG 14, the positioning information at each time point in a period (TA) up to a time point that is a certain time before is referred to, with respect to the time point (t1) when the getting on is determined. In this period (TA), positioning information at the time of being in the state outside the vehicle immediately before getting on is included. The mobile terminal 1 selects the one having the highest signal strength value in the positioning information in this period (TA). For example, the signal strength is the highest at the position (L2) at a certain positioning time point (t2) in the period (TA) as the point 142,. The mobile terminal 1 sets the selected time point to be the getting on positioning timing (Ton), and adopts the position (L2) corresponding to the time point as the first position information for registration. The mobile terminal 1 stores the first position information in the getting on information 53A.

Similarly, (B) in FIG 14 schematically shows in a bird's eye view a state where the operator W1 gets off the vehicle 10. The foregoing idea in the case of getting on is basically similar also in the case of getting off Initially, the operator W1 and the operator system are in the state inside the vehicle, and become in the state outside the vehicle by the motion of getting off the vehicle 10. A point 143 indicates a position (L3) by the GNSS positioning at a positioning time point (t3) in the state inside the vehicle. A point 144 indicates a position (L4) by the GNSS positioning at a positioning time point (t4) in the state outside the vehicle immediately after getting off. The positioning time point t4 is assumed to be a time point (ty) when the getting off is determined. A point 145 indicates a position (L5) by the GNSS positioning at a positioning time point (t5) in the state outside the vehicle after the time point (ty) when the getting off is determined.

In the first embodiment, as the point 144, the mobile terminal 1 refers to, for example, the positioning information of each time point (t) in a period (TB) up to a time point when a certain time has passed after the positioning time point (t4), with respect to the positioning time point (t4) corresponding to the time point (ty) when the getting off is determined. In the period (TB), the positioning information at the time of being in the state outside the vehicle immediately after getting off is included. The mobile terminal 1 selects the one having the highest signal strength value in the positioning information in this period (TB). For example, as the point 145, the signal strength is the highest at the position (L5) at a certain positioning time point (t5) in the period (TB). The mobile terminal 1 sets the selected time point as the getting off positioning timing (Toff), and adopts the position (L5) corresponding to the time point as the first position information for registration. The mobile terminal 1 stores the first position infonnation in the getting off information 53B.

As a modification, the time point that is a certain time before the time point when getting on is determined, may be determined as the getting on positioning timing as it is, or the point that is a certain time after the time point when getting off is determined, may be determined as the getting off positioning timing as it is. Further, as a modification, as long as the positioning accuracy in the state inside the vehicle is sufficiently high, the positioning information in the state inside the vehicle may be adopted. In that case, the process described above can be omitted. Also, when the mobile terminal 1 performs vehicle getting on and off determination by using, for example, Wi-Fi or UWB, the mobile terminal 1 can similarly determine getting on and off by deciding difference in received radio wave strength, and the like of radio waves in a predetermined band inside and outside the vehicle.

### [Storage Position Grasping_Details]

FIG 15 is an exemplary diagram for explaining grasping of a storage position in getting on a vehicle. There are sections having the section IDs = A-1, A-2, A-3, and the like, and the vehicles having VINs = 001 to 003 are stored therein. As the storage positions of those vehicles, the section ID or the like that is the second position information has already been registered in the DB 60. Note that, for example, as indicated in points 151 to 153, the first position information may also have been registered in association with the second position information. It is assumed that the target vehicle of the vehicle movement operation is the vehicle having VIN = 002 in the section A-2. The point 152 is a position coordinate corresponding to the getting on positioning timing Ton at the time of positioning outside the vehicle immediately before getting on. A point 154 indicates a position coordinate at the time of positioning inside the vehicle immediately after getting on.

In the getting on determination, the vehicle getting on and off determination unit 103 of the mobile terminal 1 sets the point 152 at the position of the getting on positioning timing Ton to be the getting on position, and transmits the getting on information 53A including the getting on position to the server 30. The position registration unit 301A of the server 30 refers to a range 150 of a predetermined radial distance centered on the point 152 at the time of getting on check, based on the getting on information 53A. The server 30 determines the second position information and the first position information included in the range 150, and decides presence or absence of the vehicle stored corresponding to the position included therein and the VIN thereof.

The server 30 converts the first position information to the second position information by the position mapping. The server 30 decides the section ID or the like that is the second position information included in the range 150 based on the position mapping. At this time, for example, when there is a section at least partially overlapping within the range 150, the mobile terminal 1 decides that the section is as a candidate. In this example, there are three sections A-1, A-2, and A-3 as candidates, within the range 150. The server 30 decides the section that is the nearest to the point 152 among the candidate sections included in the range 150. For example, the server 30 may decide by a distance between the point 152 and the center point of the section. In this example, the section A-2 is the nearest to the point 152. Accordingly, the server 30 can grasp the vehicle having VIN = 002 stored in the section A-2 as the target vehicle in the pre-movement position corresponding to the movement origin position.

Even in the case of getting off, similar decision can be made. For example, the server 30 refers to a predetermined range around the point of the position indicated by the first position information of the getting off information 53B, decides the second position information and the first position information included in the range, and decides presence or absence of the vehicle stored in that position and the VIN thereof. The server 30 decides the section that is the nearest to the target point, and in which the vehicle has not been stored. As a result, the server 30 can grasp the section as the post-movement position (second position information) corresponding to the movement destination position.

### [Effect and the Like]

As described above, according to the vehicle logistics management system of the first embodiment, the labor and cost of the operation such as the vehicle storage position registration in the conventional operation mode can be reduced, and the overall efficiency improvement of the vehicle logistics service, and the like can be realized. According to the first embodiment, the following effects are obtained. Along with the vehicle movement operation of the operator W1, operation including getting on and off can be automatically grasped without depending on equipment operation of the operator W1, and the vehicle storage position and the like can be registered and updated in the DB 60 of the center system 3.

The conventional labor of the operation related to the information management by the second operator can be reduced, almost all of the operation can be eliminated, and the information management can be realized only by the vehicle movement operation by the first operator. That is, conventional divided operations by two types of operators can be eliminated, and the cost related to the service can be reduced. Since information management can be almost automatically realized, forgetting to register the storage position and the like, registration errors, and the like of the vehicle, can be prevented naturally. Basically, the operator W1 does not need to perform any equipment operation related to the information management, for example, information input operation, complicated information decision, or the like, and even when the operator W1 or another person performs the equipment operation, the operation can be minimized, so that an operation error or the like can be prevented. Since the operator W1 can concentrate on driving, cargo handling quality can be improved, operation time can be shortened, and strictly meeting the delivery deadline and the like can be realized.

A time lag between a time point when the vehicle is moved and a time point when the position of the vehicle is registered can be eliminated only by operation by one type of the operator W1, and the vehicle storage position and the like can be always grasped on the system accurately. Therefore, accuracy and promptness of the service can be secured. Searching of the vehicle can be performed easily at any time, and a situation where the vehicle cannot be found can be prevented. When an instruction on an individual vehicle basis is transmitted from the host system, the vehicle storage position can be searched and found immediately on the system, and operation can be realized in a short time by immediately creating the operation instruction on the vehicle. In addition, since the vehicle position registration becomes easy, it becomes easy to positively perform the vehicle movement operation, and the space utilization efficiency of the site can be enhanced.

The server 30 can grasp the operation state including a case of an operation error, and can issue an additional operation instruction for performing the operation again or output an immediate alert. Even when the operator W1 makes a mistake in the target vehicle or the position in operation, the mistake is not serious but can be grasped as an error of the operation on the system, and it is possible to easily deal with the mistake by performing the operation again, alerting, or the like. That is, a burden on the operator W1 can be reduced.

With the operation management function, the state of each operation and the operator W1 can be managed including the history, and tracking afterwards, data analysis, and the like can also be performed, and efficiency of the vehicle logistics service can be improved. The data analysis can visualize a utilization status of vehicles and spaces in the site on a map and in time series. Whether a vehicle movement route and an area configuration are optimum, and the like can be also analyzed.

### [Modification]

Examples of modifications of the first embodiment include the following. (1) In the first embodiment, both the first position information and the second position information are managed in association with each other on the server 30 side, and the GNSS positioning information that is the first position information is used for the vehicle getting on and off determination on the mobile terminal 1 side. The present invention is not limited to this, and only one of the first position information and the second position information may be managed on the server 30 side, for position management. When only the first position information is registered in the DB 60, similarly to FIG 15, the registration can be performed by deciding the point of the first position information included in a predetermined range.

(2) In addition to transmitting the information 53 from the mobile terminal 1 to the server 30 at the time of getting on or off, for example, the first position information may be periodically transmitted from the mobile terminal 1 to the server 30 and recorded on the server 30 side. Accordingly, as the operation management function, the operator W1, the position of the vehicle, and the like can be grasped in detail.

### (Second Embodiment)

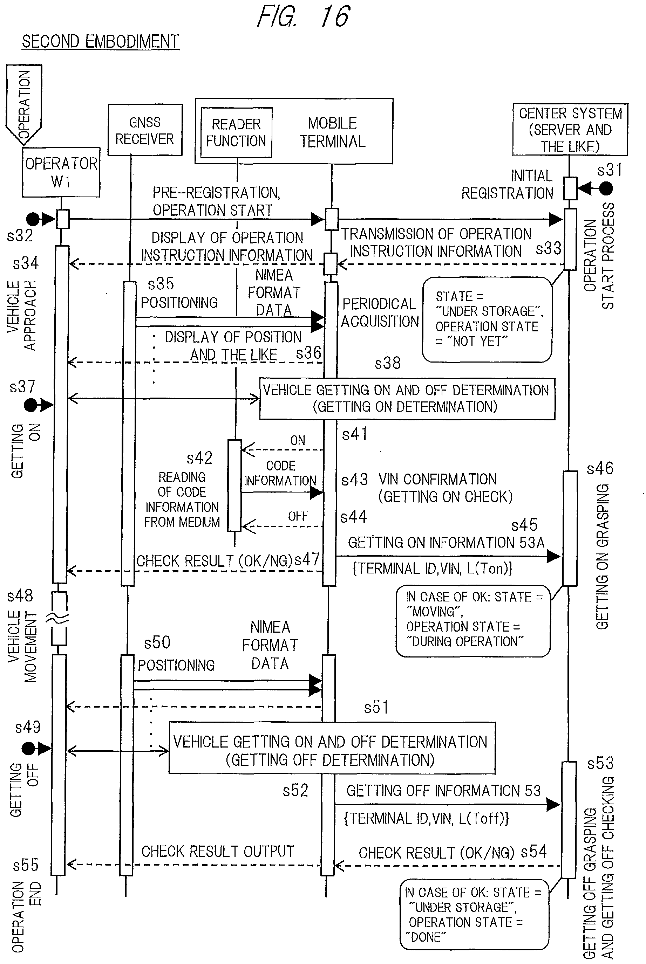

With reference to FIG. 16, a vehicle logistics management system according to a second embodiment of the present invention will be described. A basic configuration of the vehicle logistics management system of the second embodiment is the same as that of the first embodiment. Components of the second embodiment that are different from those of the first embodiment will be described below.

### [Medium, VIN]

In the system configuration of FIG 1, in the second embodiment, the medium 7 is attached to the vehicle 10 stored in the region 9 of the site, in association with the vehicle 10. In the second embodiment, the medium 7 is used in the operation. The medium 7 is prepared for the purpose of checking and managing individuals and details of the vehicle 10. The medium 7 is attached to a predetermined position of, for example, a windshield of the vehicle 10. The medium 7 is a report form, an RFID tag, or the like. Information including the VIN of the vehicle 10 is described in the form of a code 8 such as a barcode, in the medium 7.

When the medium 7 is a report form, an expense sheet, an accompanying material, or the like, the code 8 is written and printed on the report form. Alternatively, the information form is not limited to the form of the code 8. Information such as the VIN may be directly described in the report form, so that the information can be visually checked. When the medium 7 is an RFID tag, the code 8 is stored in the RFID tag. The VIN or the like may be read and written in the RFID tag, a unique ID held in advance in the RFID tag may be used as it is as the VIN, or a unique ID of the RFID tag and the VIN may be set in the DB 60 in association with each other.

In the second embodiment, when the operator W1 gets on and off the vehicle, information such as the VIN is read from the medium 7 by the operator system, the information is processed, and the information 53 including the VIN is transmitted to the server 30. The server 30 processes the information 53 including the VIN and grasps the operation. In the second embodiment, although the VIN of the medium 7 needs to be read, decision, grasping, and the like of the target vehicle can be realized more easily and reliably than in the first embodiment

In the configuration of the operator system shown in FIG. 2, in the second embodiment, the mobile terminal 1 includes a code reading unit 13, a code information acquisition unit 102, and the like, and code information 52 including the VIN is stored in the storage unit 12. The information 53 transmitted to the server 30 includes the VIN. The code reading unit 13 is a processing unit that realizes a reader function of reading the code 8 of the medium 7. When the code 8 of the medium 7 is a barcode, this reader function is a barcode reader function. When the medium 7 is an RFID tag, this reader function is an RFID reader function. The code reading unit 13 reads information by contactless near-field wireless communication with the medium 7.

The code information acquisition unit 103 performs a process of controlling the code reading unit 13 to acquire the code information 52 from the code 8 of the medium 7 and store the code information 52 in the storage unit 12. The code information 52 is information including at least the VIN and may include various information such as an attribute in addition to the VIN. The code reading unit 13 reads the code information from the code 8 of the medium 7 based on the instruction from the code information acquisition unit 103 and the motion of the operator W1 and passes the read code information to the code information acquisition unit 103.

When the information 53 is transmitted to the server 30, the server communication unit 104 describes the VIN based on the code information 52 in the information 53.

The vehicle getting on and off determination unit 103 may perform a process of confirming, for example, whether the vehicle which the operator W1 has got on is the target vehicle of the operation instruction by using the VIN of the code information 52 in the vehicle getting on and off determination process.

As a modification, the mobile terminal 1 may not be provided with a reader function, and a reader device having a similar reader function may be connected as external equipment of the mobile terminal 1, so that they cooperate with each other. In that case, the operator W1 equips the reader device in clothes or the like and performs the operation.

In FIG 3, in the second embodiment, the server 30 receives the information 53 including the terminal ID, the VIN, and the first position information from the mobile terminal 1. The position registration unit 301A processes the information 53 including the VIN, comparing the information 53 with the information of the DB 60, holds the information including the VIN in the storage unit 302, and registers the information including the VIN in the DB 60 as needed.

In FIG. 5 and FIG 8, the operator W1 goes to the place of the vehicle 10 in the movement origin position according to the operation instruction. The operator W1 reads the code 8 of the medium 7 of the vehicle 10 by using the reader function of the mobile terminal 1 immediately before getting on the vehicle 10 or immediately after getting on the vehicle 10. When getting on the vehicle 10, the operator W1 set the reader function of the mobile terminal 1 to be in an ON state. The code information acquisition unit 102 of the mobile terminal 1 stores the code information 52 including the VIN read by the code reading unit 13 in the storage unit 302 and causes the code information 52 to be displayed on the screen of the output unit 17 of the mobile terminal 1. Otherwise, the operator W1 directly visually checks information such as the VIN described in the medium 7. When the VIN of the target vehicle described in the operation instruction sheet 6 or the operation instruction information on the screen of the mobile terminal 1, and the VIN read from the medium 7 are matched, the operator W1 can confirm that the vehicle 10 is a correct target vehicle specified by the operation instruction. Note that, at that time, the code information acquisition unit 102 may compare the VIN described in the operation instruction information with the VIN read as the code information 52, decide whether the VINs are matched, and output the result on a screen or by sound.

Alternatively, when there is no specification of the target vehicle by the operation instruction, the operator W1 can specify the vehicle 10 whose VIN has been read, as the target vehicle.

Similarly to the first embodiment, the mobile terminal 1 performs the vehicle getting on and off determination. When getting on is determined, the mobile terminal 1 transmits the getting on information 53A including the read VIN to the server 30. The server 30 uses the getting on information 53A including the VIN to grasp the getting on state including the target vehicle. Alternatively, after confirming or specifying the target vehicle by the VIN, the operator W1 gets on and moves the vehicle. After getting on the vehicle, the operator W1 confirms or specifies the target vehicle by the VIN, to move the vehicle. The operator W1 gets off the vehicle at the movement destination position. The mobile terminal 1 transmits the getting off information 53B including the VIN to the server 30. The server 30 uses the getting off information 53B including the VIN to grasp the getting off state including the target vehicle.

In the second embodiment, as the operation instruction of the vehicle movement operation, various types of operations can be performed similarly to the first embodiment. Also, in the second embodiment, the VIN of the vehicle in a site, the storage position, and the like may be initially registered in the DB 60, or may not be initially registered in the DB 60. When they are initially registered, the VIN of the target vehicle can be specified by the operation instruction. Even when they are not initially registered, vehicle search is performed by the operator W1 according to the operation instruction including attributes, areas, and the like, from the state, the target vehicle is specified by reading the VIN of the medium 7, and the VIN, the storage position, and the like of the target vehicle can be registered in the DB 60.

### [Sequence]

FIG. 16 shows a sequence of the entire process in the second embodiment. Steps s31 to s55 composing the sequence of FIG 16 are included. The steps will be described below in order of the steps.

(s31 to s36) The steps s31 to s36 are similar to the steps s1 to s6 in the first embodiment The VIN is included in the code 8 of the medium 7 of the vehicle in the site. The administrator initially registers information including the VIN in the DB 60. The administrator imparts the operation instruction including the VIN to the operator W1. The operator W1 approaches the target vehicle in accordance with the operation instruction. The GNSS receiver 2 periodically outputs the NMEA format data that is the first position information to the mobile terminal 1. The mobile terminal 1 displays the current position and the like on the screen based on the NMEA format data.

(s37 to s38) At the step s37, the operator W1 finds the target vehicle in the movement origin position and gets on the vehicle. At this time, the operator W1 does not need to operate the reader function. At the step s38, the mobile terminal 1 performs getting on and off determination process similarly to the first embodiment, and at the step s38, getting on determination corresponding to the getting on operation at the step s37 is performed.

Here, in the sequence of FIG 16 of the second embodiment, in the reading of the code 8 of the medium 7 at the time of getting on, the operation of the operator W1 is minimized as described below, and the reading is automatically realized in accordance with the motion of getting on. The reader function is a function capable of reading within a predetermined distance range and is designed so as to read from the RFID tag that is the medium 7 in a state where the operator W1 gets on the vehicle.

(s41) When the getting on is determined at the step s38, the mobile terminal 1 automatically turns on the reader function at that timing. That is, the code information acquisition unit 102 instructs the code reading unit 13 that is the reader function, to turn on the power and the function, to cause reading from the code 8 of the medium 7 to be started.

(s42) The code reading unit 13 reads the code 8 from the medium 7 of the vehicle, and passes the code information 52 including the read VIN to the code information acquisition unit 102. The code information acquisition unit 102 stores the acquired code information 52 in the storage unit 302.

Note that, when a plurality of pieces of information from a plurality of media 7 are read at the time of reading by the reader function, the code information acquisition unit 103 may acquire information having the highest reception level among the plurality of pieces of information, that is, information from the medium 7 that is the nearest.

(s43) When the mobile terminal 1 has the operation instruction information, the getting on check can be performed on the mobile terminal 1 side, not on the server 30 side. The code information acquisition unit 102 refers to the information such as the VIN in the code information 52, compares the VIN with the VIN described in the operation instruction information, and checks whether they are matched. When the VINs are matched, the code information acquisition unit 102 can confirm that the vehicle is a correct target vehicle, and when the VINs are not matched, the code information acquisition unit 102 can decide that the vehicle is incorrect.

Note that confirmation of this VIN may be performed in such a way that information is displayed on the screen of the mobile terminal 1 and the operator W1 decides by viewing the information. When the operator W1 confirms the match, the operator W1 presses a button or the like.

(s44) When confirming the matches of the VINs after reading from the medium 7, the code information acquisition unit 102 turns off the power and the function of the reader function. Power consumption can be suppressed, and labor of the operator W1 can be reduced by automatically turning on the reader function only when necessary.

(s45) When the getting on is determined at the step s38 and after confirming the correct VIN at the steps s41 to s44, the mobile terminal 1 transmits the getting on information 53A to the server 30. The getting on information 53A includes the above VIN that has been read, in addition to the terminal ID described above and the first position information, and is information indicating that the getting on is correct getting on.

(s46) The server 30 refers to, compares, and confirms the getting on information 53A received from the mobile terminal 1 and the information in the DB 60, to grasp the vehicle getting on state in the vehicle movement operation. At this time, the server 30 can search the DB 60 by using the VIN included in the getting on information 53A. The server 30 updates the state of the vehicle and the operation state in the DB 60.

Note that, at the step s46, the server 30 may use the getting on information 53A including the VIN and compare the getting on information 53A with the operation instruction to perform a getting on check as to whether the motion of getting on of the operator W1 is correct. Also, in that case, the process of VIN confirmation in the mobile terminal 1 at the step s43 may be omitted.

(s47) The mobile terminal 1 displays the result (OK/NG) of the getting on check at the step s43 on the screen, or outputs by sound. Accordingly, the operator W1 can recognize correct getting on (OK) or incorrect getting on (NG). When it is the incorrect getting on (NG), the mobile terminal 1 outputs an alert to urge the operator W1 to perform the operation again.

(s48 to s49) At the step s48, the operator W1 drives and moves the vehicle from the movement origin position to the movement destination position. At the step s49, the operator W1 gets off the vehicle at the movement destination position.

(s50 to s52) The GNSS receiver 2 periodically outputs the NMEA format data that is the first position information to the mobile terminal 1. The mobile terminal 1 acquires the NMEA format data and displays the current position and the like on the screen. At the step s51, similarly to the first embodiment, the mobile terminal 1 uses the NMEA format data to perform the get on and off determination. At the step s51, getting off determination corresponding to the getting off operation at the step s49 is performed. At the step s52, when getting off is determined, the mobile terminal 1 transmits the getting off information 53B including the VIN to the server 30. This VIN is the same as the VIN at the time of getting on.

(s53) The server 30 refers to, compares, and confirms the getting off information 53B received from the mobile terminal 1 and the information in the DB 60, to grasp the vehicle getting off state in the vehicle movement operation. The server 30 uses the getting off information 53B including the VIN to perform the getting off check as to whether it is the correct getting on. The server 30 decides whether it is the correct getting off by comparing the first position information at the time of getting off with the movement destination position in the operation instruction information. When it is the correct getting off, the server 30 updates information such as the vehicle state and the operation state in the DB 60.

At the step s53, the getting off check is not limited to be performed on the server 30 side. Similarly to the step s43, the getting off check may be performed on the mobile terminal 1 side. In that case, the mobile terminal 1 performs the getting off check as to whether the getting off is correct by comparing the first position information at the time of getting off with the movement destination position in the operation instruction information, after the step s51. At the step s52, the mobile terminal 1 transmits the getting off information 53B indicating that it is the correct getting off.

(s54 to s55) The server 30 transmits the result (OK/NG) of the getting off check to the mobile terminal 1. The mobile terminal 1 displays the result on a screen or outputs by sound. The operator W1 recognizes the result, and ends the operation when it is the correct getting off. When there is the next vehicle movement operation, a similar process is repeated.

As a modification, immediately before or immediately after getting on, the reader function may be turned on by operation by the operator W1, so that the VIN or the like is read from the medium 7. Also, the getting on check and the getting off check on the mobile terminal 1 side described above can be similarly applied to the first embodiment.

### [Effect and the Like]

As described above, according to the second embodiment, similarly to the first embodiment, the labor and cost of the operation such as the vehicle storage position registration in the conventional operation mode can be reduced, and the overall efficiency improvement of the vehicle logistics service, and the like can be realized. According to the second embodiment, the following effects are obtained. Although the reader function needs to be equipped in the operator system, the VIN can be acquired from the medium 7 at the place of the vehicle 10, and accordingly, the target vehicle and the like can be grasped more reliably. The server 30 can perform decision or the like more accurately and promptly by using the VIN obtained from the mobile terminal 1.

Initial registration of the VIN and the like in the DB 60 is not essential. The operation can be performed from the state without initial registration. In other words, the operation of initial registration of the VIN and the like in the DB 60 can also be realized as a modification of the vehicle movement operation. Accordingly, the labor of the initial registration operation can also be reduced.

When the VIN and the like have been registered in the DB 60, control as below can also be performed. The operator W1 gets on the vehicle, and the mobile terminal 1 reads the VIN from the medium 7, and transmits the getting on information 53A including the VIN to the server 30. The server 30 creates the operation instruction corresponding to each vehicle from the VIN. For example, since the server 30 finds the delivery destination and the like of the vehicle having the VIN from the registration information in the DB 60, the server 30 creates the operation instruction for moving the vehicle to the area or the section corresponding to the delivery destination and the like. The server 30 transmits the operation instruction information to the mobile terminal 1. The operator W1 performs the operation by viewing the operation instruction information.

### (Third Embodiment)

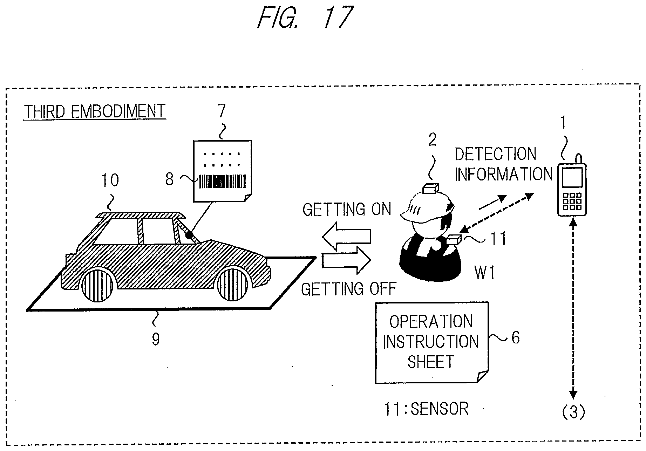

With reference to FIG 17, a vehicle logistics management system according to a third embodiment will be described. A basic configuration of the third embodiment is the same as that of the first embodiment Components in the third embodiment that are different from those of the first embodiment will be described below. In the first and the second embodiments, means of determining the GNSS positioning information is used as the vehicle getting on and off determination means. In the third embodiment, a sensor included in the mobile terminal 1 is used as the vehicle getting on and off determination means.

FIG 17 shows a configuration of the vehicle logistics management system according to the third embodiment. The operator W1 is equipped with the sensor 11 in operation. For example, the sensor 11 is attached to a predetermined position such as the clothes, the shoulder, or the back of the operator W1. A state around the operator W1, and a state how close the operator W1 and the vehicle 10 are are detected with this sensor 11. When the operator W1 gets on the vehicle, the operator W1 sits in a driver's seat. At that time, the sensor 11 of the operator W1 comes into contact with or is in proximity with the driver's seat. The sensor 11 detects this contact or this proximity state.

The mobile terminal 1 cooperates with the sensor 11. The sensor 11 is wired or wirelessly connected to the mobile terminal 1. The sensor 11 outputs detection information such as presence or absence of contact, to the mobile terminal 1. The mobile terminal 1 inputs the detection information from the sensor 11.

The vehicle getting on and off determination unit 103 in FIG 2 performs the getting on and off determination by using the detection information from the sensor 11. For example, when the detection information of the sensor 11 changes from the first value indicating absence of contact to the second value indicating presence of contact, the vehicle getting on and off determination unit 103 determines the getting on operation. Conversely, when the detection information of the sensor 11 changes from the second value to the first value, the vehicle getting on and off determination unit 103 determines the getting off operation. In particular, the vehicle getting on and off determination unit 103 may determine getting on when the state has changed to the value of presence of contact and a certain time has elapsed, or may determine getting off when the state has changed to the value of absence of contact and a certain time has elapsed.

Other functions and operations are the same as those in the first embodiment and the like. The mobile terminal 1 acquires the first position information from the GNSS receiver 2 by the position information acquisition unit 101. When the getting on is determined, the mobile terminal 1 transmits the getting on information 53A including the terminal ID and the first position information to the server 30 by the server communication unit 104. The server 30 grasps the getting on state by using the getting on information 53A and the information in the DB 60. This is basically the same also in getting off.

According to the third embodiment, although it is necessary to equip the operator W1 with the sensor 11, the sensor 11 can realize the vehicle getting on and off determination relatively easily, and the similar effects to that in the first embodiment and the like can be obtained.

Examples of modifications of the third embodiment include the following. The mobile terminal 1 and the sensor 11 may be integrated into one. That is, the mobile terminal 1 may include a sensor function. Also, detection by the sensor 11 is not limited to detection of being in contact with or in proximity with the driver's seat. For example, a predetermined object for detection is arranged inside the vehicle 10. When the operator W1 gets on the vehicle 10, the sensor 11 detects a proximity state within a predetermined distance range from the object The vehicle getting on and off determination can be performed similarly, by using presence or absence of this proximity state.

In the third embodiment, although it is not necessary to use the medium 7 included in the vehicle 10, the VIN may be processed using the medium 7 similarly to the second embodiment. When the vehicle 10 includes the medium 7, the medium 7 may be used as a predetermined object for detection. When the medium 7 is, for example, an RFID tag, the medium 7 transmits radio waves within a predetermined distance range. When the operator W1 gets on the vehicle 10, the sensor 11 detects a proximity state within the predetermined distance range to the medium 7. The vehicle getting on and off determination can be performed similarly, by using presence or absence of this proximity state. The predetermined distance range for determining presence or absence of the proximity state, or the like, is designed in consideration of the size of the vehicle, the section, and the like, in advance.

The reading of the VIN and the like from the medium 7 by the reader function in the second embodiment and the detection of the proximity state by the sensor 11 described above may be integrated into one. In this embodiment, a proximity state may be determined when the VIN and the like can be read from the medium 7 by the reader function, and a non-proximity state may be determined when the reading cannot be performed. However, in this case, it is necessary to turn on the reader function in advance.

The sensor 11 may detect a stopped state and a moving state of the vehicle 10. The sensor 11 detects an acceleration and the like generated when the operator W1 causes the vehicle 10 to start after getting on the vehicle 10, and the acceleration and the like are output to the mobile terminal 1. The mobile terminal 1 can determine whether the vehicle is starting or stopping by deciding a magnitude of the acceleration and the like, and determines starting or stopping in association with getting on and off.

The sensor 11 may be a sensor capable of detecting a proximity state using ultrasonic waves, infrared rays, or the like, or a sensor capable of detecting a proximity state with a metal of the vehicle body or the like. The sensor 11 may be a sensor capable of detecting a pressure in a state where the operator W1 is sitting in the driver's seat, or may be a sensor capable of distinguishing and detecting a state where the operator W1 is standing and a state where the operator W1 is sitting.

### (Fourth Embodiment)

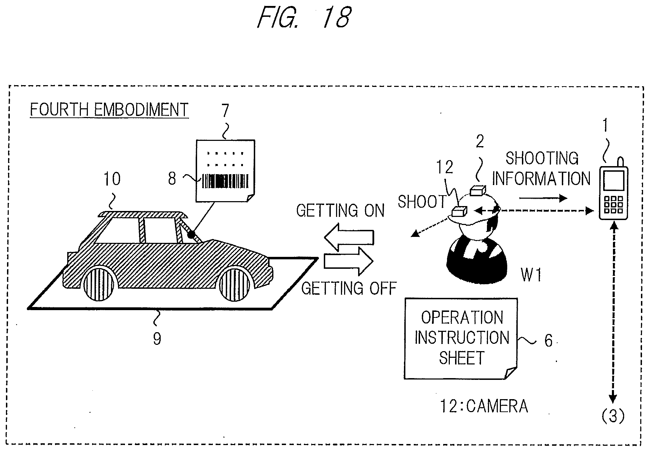

With reference to FIG 18, a vehicle logistics management system according to a fourth embodiment will be described. A basic configuration of the fourth embodiment is the same as that of the first embodiment Components in the fourth embodiment that are different from those of the first embodiment will be described below. In the fourth embodiment, a camera and image analysis are used as vehicle getting on and off means.

FIG 18 shows a configuration of the vehicle logistics management system according to the fourth embodiment. The operator W1 is equipped with a camera 12 as an operator system during the operation. For example, the camera 12 is attached to a predetermined position such as a hat, or eye glasses of the operator W1. The camera 12 faces the front of the operator W1 and takes an image of the direction. The mobile terminal 1 cooperates with the camera 12. The camera 12 is wired or wirelessly connected to the mobile terminal 1. The camera 12 transmits an image or the like that is shooting information, to the mobile terminal 1. The mobile terminal 1 performs vehicle getting on and off determination by using the shooting information from the camera 12.

The vehicle getting on and off determination unit 103 decides the proximity state between the operator W1 and the vehicle 10 by performing an image analysis process on the shooting information. The vehicle getting on and off determination unit 103 decides the state outside the vehicle immediately before the operator W1 gets on the vehicle and the state inside the vehicle immediately after the operator W1 gets on the vehicle, from the image analysis result, and accordingly, the operations of getting on and off are determined. In the image analysis process, the vehicle getting on and off determination unit 103 may decide a state outside the vehicle or a state inside the vehicle by, for example, detecting a predetermined object or a mark from an image. In this image analysis process, a complicated process is unnecessary, and well-known techniques can be applied.

Other functions and operations are the same as those in the first embodiment and the like. In the fourth embodiment, although it is not necessary to use the medium 7 included in the vehicle 10, the VIN may be processed by using the medium 7 similarly to the second embodiment.

According to the fourth embodiment, although it is necessary to equip the operator W1 with the camera 12, the camera 12 can realize the vehicle getting on and off determination relatively easily, and the similar effects to that in the first embodiment and the like can be obtained.

Examples of modifications of the fourth embodiment include the following. The mobile terminal 1 and the camera 12 may be integrated into one. That is, the mobile terminal 1 may include a camera function.

Also, instead of providing the camera 12 for each operator W1, a camera may be installed at a predetermined place in a site. The camera shoots a situation in the site. The camera includes a wireless communication function. The mobile terminal 1 or the server 30 cooperates with the camera. For example, the server 30 acquires shooting information from the camera by wireless communication and performs vehicle getting on and off determination through the image analysis process. For example, when the getting on is determined, the server 30 communicates with the mobile terminal 1 to cause the mobile terminal 1 to transmit the getting on information 53A. When the operator W1 is in proximity with the vehicle or gets on the vehicle, the image of the shooting information includes the vehicle and the operator W1. Therefore, the vehicle getting on and off determination can be performed through a known image analysis process. Also, a predetermined mark or the like may be attached to the vehicle or the operator W1 in advance, and the vehicle or the operator W1 may be identified by deciding the mark or the like in the image analysis process.

### EXPLANATION OF REFERENCE CHARACTERS

1 ... Mobile terminal, 2 ... GNSS receiver, 3 ... center system, 4 ... GNSS satellite, 6 ... operation instruction sheet, 7 ... medium, 8 ... code, 9 ... region, 10 ... vehicle, 30 ... server, 31 ... PC.

## Claims

1. A vehicle logistics management system managing a position of a vehicle in a site, the vehicle logistics management system comprising:
a mobile terminal which is carried by an operator performing an operation of moving the vehicle in the site;
a server device communicating with the mobile terminal and registering information including the position of the vehicle in a DB; and
vehicle getting on and off determination means determining that the operator has got on the vehicle and got off the vehicle in the operation,
the mobile terminal having
a position information acquisition unit acquiring first position information by GNSS positioning, and
a server communication unit transmitting, when the vehicle getting on and off determination means determines the getting on, getting on information including the first position information obtained by positioning in vicinity of a time point when the getting on is determined, and a terminal ID, to the server device, and transmitting, when the vehicle getting on and off determination means determines the getting off, getting off information including the first position information obtained by positioning in vicinity of a time point when the getting off is determined, and the terminal ID, to the server device, and
the server device having a position registration unit which grasps that the operator has got on the vehicle at a pre-movement position indicated by the first position information by using the getting on information, grasps that the operator has got off the vehicle at a post-movement position indicated by the first position information by using the getting off information, thereby grasps that the operation has been performed, and registers information including the post-movement position of the vehicle in the DB.

2. The vehicle logistics management system according to claim 1,
wherein the vehicle getting on and off determination means determines the getting on and the getting off by deciding difference in information from a GNSS by the GNSS positioning inside and outside the vehicle by using the first position information.

3. The vehicle logistics management system according to claim 2,
wherein the vehicle getting on and off determination means decides difference in information of a satellite used and a signal strength which are included in the information from the GNSS.

4. The vehicle logistics management system according to claim 3,
wherein the vehicle getting on and off determination means obtains the number of satellites with the signal strength having a first threshold or more, determines a state outside the vehicle when the number of satellites is a second threshold or more, determines a state inside the vehicle when the number of satellites is less than the second threshold, determines the getting on when a state has been changed from the state outside the vehicle to the state inside the vehicle, and detennines the getting off when the state has been changed from the state inside the vehicle to the state outside the vehicle.

5. The vehicle logistics management system according to claim 1, further comprising:
reader means reading information including a vehicle ID, from a medium provided in the vehicle, when the operator gets on the vehicle in the operation,
wherein the mobile terminal has an information acquisition unit acquiring information including the vehicle ID read by the reader means,
the server communication unit transmits the getting on information including the first position information, the terminal ID, and the vehicle ID, to the server device when the vehicle getting on and off determination means determines the getting on, and transmits the getting off information including the first position information, the terminal ID, and the vehicle ID, to the server device when the vehicle getting on and off determination means determines the getting off, and
the position registration unit grasps that the operator has got on the vehicle indicated by the vehicle ID, at a pre-movement position indicated by the first position information by using the getting on information, grasps that the operator has got off the vehicle indicated by the vehicle ID, at the post-movement position indicated by the first position information by using the getting off information, thereby grasps that the operation has been performed, and registers the information including the post-movement position of the vehicle in the DB.

6. The vehicle logistics management system according to claim 1, further comprising:
a sensor which is carried by the operator, cooperates with the mobile terminal, and detects a state of being in contact with or in proximity with the vehicle,
wherein the vehicle getting on and off determination means determines the getting on and the getting off by deciding a state of being in contact with or in proximity with the vehicle by using detection information by the sensor.

7. The vehicle logistics management system according to claim 1, further comprising:
a camera which is carried by the operator, and cooperates with the mobile terminal,
wherein the vehicle getting on and off determination means determines the getting on and the getting off by deciding a state of being in proximity with the operator and the vehicle through an image analysis process using shooting information of the camera.

8. The vehicle logistics management system according to claim 1, further comprising:
a camera which is installed in the site, and cooperates with the server device,
wherein the server device has the vehicle getting on and off determination means, and
the vehicle getting on and off determination means determines the getting on and the getting off by deciding a state of being in proximity with the operator and the vehicle through an image analysis process using shooting information of the camera.

9. The vehicle logistics management system according to claim 1,
wherein the server device
registers a position in a configuration of an area or a section in the site as second position information in the DB,
has position mapping means converting the first position information into the second position information, and
converts each of the first position information of the getting on information and the first position information of the getting off information into the second position information by the position mapping means, to register at least the second position information in the DB, as the post-movement position of the vehicle.

10. The vehicle logistics management system according to claim 1,
wherein the server device has
a registration unit which registers, in the DB, vehicle management information including a vehicle ID, an attribute, a storage position, and a state of the vehicle, and operation instruction information including an operation ID of the operation, a vehicle ID of a target vehicle, a movement origin position, a movement destination position, and an operation state, based on an operation by an administrator, and
a search unit which outputs contents of the vehicle management information and the operation instruction information to a screen, based on an operation of the administrator, and searches information including the storage position of the vehicle, based on a search condition that has been input.

11. The vehicle logistics management system according to claim 10,
wherein the server device registers operation history information including a history of the operation state for each of the operation for each of the terminal ID of the operator in the DB, and outputs contents of the operation history information to the screen, based on an operation by the administrator.

12. The vehicle logistics management system according to claim 1,
wherein the server device
compares the getting on information with information in the DB to decide whether the vehicle which the operator has got on or the position is correct or incorrect, sets an operation state of the operation to be an error when deciding that it is incorrect, and transmits an alert to the mobile terminal, and
compares the getting off information with the information in the DB to decide whether the vehicle which the operator has got off or the position is correct or incorrect, sets an operation state of the operation to be an error when deciding that it is incorrect, and transmits an alert to the mobile terminal.

13. The vehicle logistics management system according to claim 1,
wherein the mobile terminal
receives, as operation instruction information on the operation, the operation instruction information including at least one of the movement origin position and the movement destination position of the vehicle, from the server device,
when the getting on is determined, compares the first position information and the operation instruction information to decide whether the vehicle which the operator has got on or the position is correct or incorrect, and outputs an alert when deciding that it is incorrect, and
when the getting off is determined, compares the first position information and the operation instruction information to decide whether the vehicle which the operator has got off or the position is correct or incorrect, and outputs an alert when deciding that it is incorrect.
